# EUROPEAN PATENT SPECIFICATION

(11) **EP 1 533 687 B1**
(45) Date of publication and mention of the grant of the patent: **29.09.2010**
(21) Application number: 04025054.0
(22) Date of filing: 21.10.2004
(51) Int. Cl.: G06F 3/033

(54) **Method and system for selecting and manipulating multiple objects**
Verfahren und System zum Auswählen und Manipulieren von mehreren Objekten
Méthode et système pour sélectionner et manipuler de multiple objets

(30) Priority: 19.11.2003 US 716761
(43) Date of publication of application: 25.05.2005
(73) Proprietor: MICROSOFT CORPORATION, Redmond, WA 98052 (US)
(72) Inventor: Allyn, Barry C., Redmond Washington 98052 (US); Nelson, Mark, Redmond Washington 98052 (US)
(74) Representative: Grünecker, Kinkeldey, Stockmair & Schwanhäusser Anwaltssozietät

(56) References cited:
- US-B1- 6 295 069

## Description

### TECHNICAL FIELD

The present invention is generally related to computer software that can be used to create and manipulate documents. More specifically, the present invention can be used to select and manipulate multiple objects in a document.

### BACKGROUND OF THE INVENTION

The advent and continuing development of computer technology has led to an increasing usage of computing devices, such as desktop or laptop computers, and software applications, such as graphics or word processing programs, to create and manipulate documents. Such documents may include all types of formats, such as drawings, word processing documents, spreadsheets, desktop publishing projects, webpages, etc. Furthermore, such documents may be organized into one or more pages of objects and/or other data.

Many times, a computing device user may need to manipulate two or more (i.e., multiple) objects that have been created in a document using a software application. For example, a drawing document may be created that includes several shape and/or text objects that a user needs to modify. Furthermore, a user may often need to manipulate such multiple objects based on a common reference. For example, the user may need to rotate or flip (e.g., vertically or horizontally) the multiple objects about a common axis as if they were a single common object. As another example, the user may need to resize one or more dimensions of the multiple objects in a single operation without distorting the shapes of the objects. Additionally, if one or more of the multiple objects is rotated with respect to a standard reference (e.g., horizontal and vertical axes), a user may need to manipulate the multiple objects based on that rotated orientation. In some instances, the user may need to manipulate the multiple objects (e.g., rotate them) with respect to an axis that is not at the center of the multiple objects.

Some existing approaches provide the capability for a user to select multiple objects in a document and then transform the multiple objects into a single object representation that can be manipulated (sometimes referred to as "grouping"). However, the transformation of the multiple objects in this manner typically requires one or more operations to be performed before the manipulations. Furthermore, the multiple objects are usually permanently transformed into a new, single object representation. Therefore, additional operations typically need to be performed to reverse the transformation (sometimes referred to as "ungrouping") so that one or more of the multiple objects can be manipulated separately from the other objects that were transformed. Moreover, these numerous operations to group and ungroup the multiple objects may need to be performed many times during the manipulation of the document, thereby increasing the effort and complication involved for the user, the computing device, and the software application.

Some of the above mentioned existing approaches provide the capability for a user to rotate or flip grouped multiple objects. However, these existing approaches typically are limited to rotating or flipping the grouped objects about a fixed axis located at or near the center of the group of multiple objects. Furthermore, these existing approaches typically group the multiple objects with respect to a standard reference orientation, which is usually a fully vertical and fully horizontal axis (e.g., x-y axes). Thus, even if one or more of the multiple objects has an orientation that is rotated away from such standard reference orientation, the existing approaches are limited to referencing the manipulations of the grouped objects with respect to the standard orientation.

Some of the above mentioned existing approaches may also provide for the user to resize the grouped multiple objects, for example, by stretching or compressing the objects along one or more of the reference axes. However, during a single axis (e.g., horizontal) resizing of the grouped objects, these existing approaches are typically limited to resizing the grouped objects only with respect to the single axis. As a result, the shape of objects in the group that are not aligned with the standard reference orientation are typically distorted during such single axis resizing operations, instead of being proportionally resized with respect to both axes to maintain the original shape characteristics. For example, if one of the grouped objects is a right-angle triangle that is oriented at rotation other than the standard reference orientation, horizontally stretching the grouped objects according to the existing approaches will typically cause the triangle to lose its right-angle characteristic.

In consideration of the above described limitations of existing approaches, there is a need in the art for more flexible approaches to selecting and manipulating multiple objects in a document. Such new approaches need to provide the capability to select and manipulate multiple objects with respect to a common reference and/or by a single operation without the need to permanently transform or group the objects to form a new object, which must later be ungrouped in order to manipulate one or more of the individual objects. These new approaches need to also provide the capability to manipulate multiple objects, for example by rotating or flipping them, with respect to an axis or reference point that can be adjusted to other positions besides the approximate center of the group of objects.

Such new approaches are needed in the art to also provide the capability to select and manipulate multiple objects based on the orientation of one or more objects that are not at the same orientation as the standard reference orientation. Furthermore, such new approaches should provide the capability to resize one or more of the multiple objects with respect to a single orientation direction (e.g., vertical or horizontal) without distorting those objects that are not at the same orientation as the standard reference orientation.

US-B-6 295 069 describes a three-dimensional computer graphics tool facilitating the movement of displayed objects. In a computer graphics system, a CPU executes a set of instructions known as a selected object manager, which has access to a display object's database. When a tool button is activated while a particular object is displayed on a monitor screen, a object movement reference frame appears. The object movement reference frame includes frame features including a spherical contour line and various handles. The handles of the object movement reference frame include a plurality of object image handles, which are generally classified as planner handles and knob handles. A handle set is comprised of a paired or connected object image handles.

It is the object of the present invention to improve the handling of multiple objects.

This object is solved by the subject matter of the independent claims.

Preferred embodiments are defined in the dependent claims.

### SUMMARY OF THE INVENTION

Exemplary embodiments of the present invention can provide the capability to select and manipulate multiple objects in a document, such as a drawing, word processing document, spreadsheet, desktop publishing project, webpage, etc. For example, a user of a computing device and a document software application can be provided with the capability to select and manipulate multiple objects with respect to a common reference and/or by a single operation without the need to permanently transform or group the objects to form a new object or to later transform or ungroup the objects in order to manipulate one or more of them individually. The capability can also be provided to manipulate multiple objects, for example by rotating or flipping them, with respect to an axis or reference point that can be adjusted to other positions besides the approximate center of the group of objects.

Another capability can be provided to select and manipulate multiple objects based on the orientation of one or more objects that are not at the same orientation as a standard reference orientation. Furthermore, the capability can also be provided to resize one or more of the multiple objects with respect to a single orientation direction (e.g., vertical or horizontal) without distorting those objects that are not at the same orientation as the standard reference orientation.

In a typical aspect of the present invention, information can be received in response to the selection of two or more objects in a document Highlighting objects can be displayed that correspond to the selected objects and can provide visual feedback to indicate that the objects have been selected. Additionally, a multiple selection highlight object can be displayed that corresponds to the highlight objects. Typically, the multiple selection highlight object at least partially bounds the highlight objects to provide additional visual feedback to indicate that the objects have been selected.

Both the highlight objects and the multiple selection highlight object can be displayed in the document to provide visual feedback of the multiple selection of the two or more objects. Once the two or more objects are selected, they are automatically configured to be commonly manipulated based on the manipulations of the multiple selection highlight object. However, as soon as at least one of the objects is deselected, each object can then be manipulated individually.

For example, the two or more objects can be rotated about a common axis by rotating the multiple selection highlight object that can be displayed in response to selecting the two or more objects. Then, after at least one of the objects is deselected, for example by selecting a blank area in the document, each of the two or more objects can be separately rotated about an individual axis.

These and other aspects of the invention will be described further in the detailed description below in connection with the appended drawings and claims.

### BRIEF DESCRIPTION OF THE DRAWINGS

Fig. 1 is a block diagram illustrating an exemplary operating environment for implementing various exemplary embodiments of the present invention.
Fig. 2 is a block diagram illustrating an exemplary component architecture in accordance with various exemplary embodiments of the present invention.
Figs. 3A-3F are exemplary screen views illustrating the selection and rotation related manipulation of multiple objects in accordance with various exemplary embodiments of the present invention.
Figs. 4A-4B are exemplary screen views illustrating the selection and vertical flip related manipulation of multiple objects in accordance with various exemplary embodiments of the present invention.
Figs. 5A-5B are exemplary screen views illustrating the selection and horizontal flip related manipulation of multiple objects in accordance with various exemplary embodiments of the present invention.
Figs. 6A-6D are exemplary screen views illustrating the selection and resize related manipulation of multiple objects in accordance with various exemplary embodiments of the present invention.
Figs. 7A-7B are exemplary screen views illustrating the selection and resize related manipulation of multiple objects at various orientations in accordance with various exemplary embodiments of the present invention.
Fig. 8 is a logic flow diagram illustrating an exemplary process for selecting multiple objects in accordance with various exemplary embodiments of the present invention.
Fig. 9 is a logic flow diagram illustrating another exemplary process for selecting multiple objects in accordance with various exemplary embodiments of the present invention.
Fig. 10 is a logic flow diagram illustrating an exemplary process for rotating multiple objects in accordance with various exemplary embodiments of the present invention.
Fig. 11 is a logic flow diagram illustrating another exemplary process for rotating multiple objects in accordance with various exemplary embodiments of the present invention.
Fig. 12 is a logic flow diagram illustrating exemplary process for deselecting multiple objects in accordance with various exemplary embodiments of the present invention.
Fig. 13 is a logic flow diagram illustrating an exemplary process for flipping multiple objects in accordance with various exemplary embodiments of the present invention.
Fig. 14 is a logic flow diagram illustrating another exemplary process for flipping multiple objects in accordance with various exemplary embodiments of the present invention.
Fig. 15 is a logic flow diagram illustrating an exemplary process for resizing multiple objects in accordance with various exemplary embodiments of the present invention.
Fig. 16 is a logic flow diagram illustrating another exemplary process for resizing multiple objects in accordance with various exemplary embodiments of the present invention.

### DETAILED DESCRIPTION OF THE EXEMPLARY EMBODIMENTS

Exemplary embodiments of the present invention can provide the capability to select and manipulate multiple objects in a document, such as a drawing, word processing document, spreadsheet, desktop publishing project, webpage, etc. According to exemplary embodiments of the present invention, a user of a computing device and a document software application can be provided with the capability to select and manipulate multiple objects with respect to a common reference and/or by a single operation without the need to permanently transform or group the objects to form a new object, which must later be ungrouped in order to manipulate one or more of the individual objects. The capability can also be provided to manipulate multiple objects, for example by rotating or flipping them, with respect to an axis or reference point that can be adjusted to other positions besides the approximate center of the group of objects.

Exemplary embodiments of the present invention can also provide the capability to select and manipulate multiple objects based on the orientation of one or more objects that are not at the same orientation as a standard reference orientation. Furthermore, the capability can also be provided to resize one or more of the multiple objects with respect to a single orientation direction (e.g., vertical or horizontal) without distorting those objects that are not at the same orientation as the standard reference orientation.

### Exemplary Operating Environment

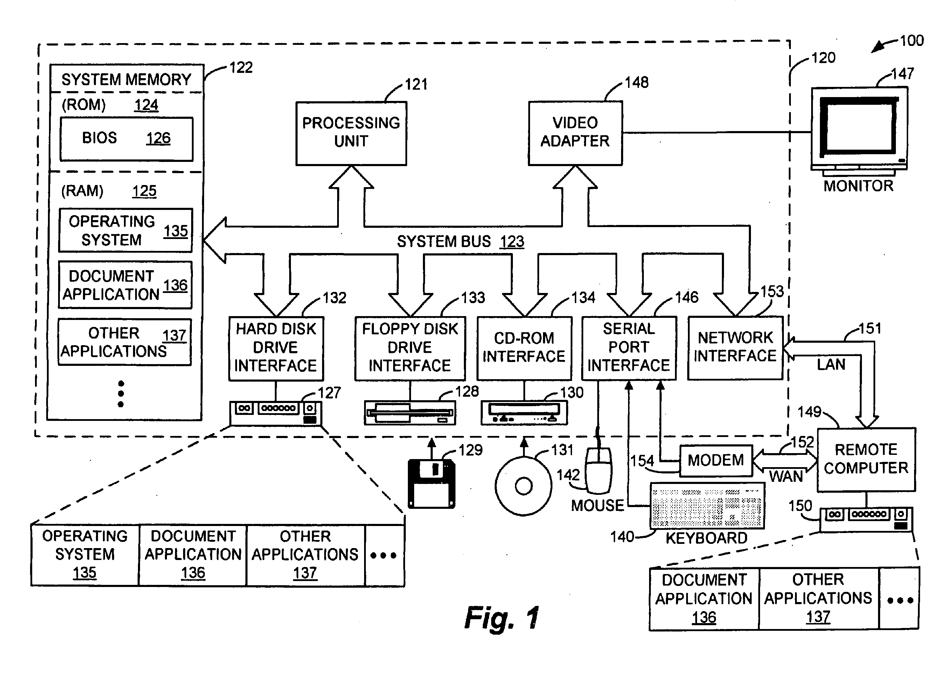

Exemplary embodiments of the present invention will hereinafter be described with reference to the drawings, in which like numerals represent like elements throughout the several figures. Fig. 1 illustrates an exemplary operating environment 100 for implementation of the present invention.

The exemplary operating environment 100 includes a general purpose computing device 120, which may be a conventional personal computer. The computing device 120 may include a processing unit 121, a system memory 122, and a system bus 123 that can couple various system components, including the system memory 122, to the processing unit 121. The system bus 123 may be any of several types of bus structures including a memory bus or memory controller, a peripheral bus, or a local bus using any of a variety of bus architectures. The system memory may include a read-only memory (ROM) 124 and a random access memory (RAM) 125. A basic input/output system (BIOS) 126, which may contain basic routines that help to transfer information between elements within computing device 120, such as during start-up, may be stored in ROM 124.

Computing device 120 may further include a hard disk drive 127 for reading from and writing to a hard disk, not shown, a magnetic disk drive 128 for reading from or writing to a removable magnetic disk 129, and an optical disk drive 130 for reading from or writing to a removable optical disk 131 such as a CD-ROM or other optical media. Hard disk drive 127, magnetic disk drive 128, and optical disk drive 130 may be connected to system bus 123 by a hard disk drive interface 132, a magnetic disk drive interface 133, and an optical disk drive interface 134, respectively.

Although the exemplary environment described herein employs hard disk 127, removable magnetic disk 129, and removable optical disk 131, it should be appreciated by those skilled in the art that other types of computer readable media which can store data that is accessible by a computer, such as magnetic cassettes, flash memory cards, digital video disks, Bernoulli cartridges, RAMs, ROMs, and the like, may also be used in the exemplary operating environment 100. The drives and their associated computer readable media can provide nonvolatile storage of computer-executable instructions, data structures, program modules, and other data for computing device 120.

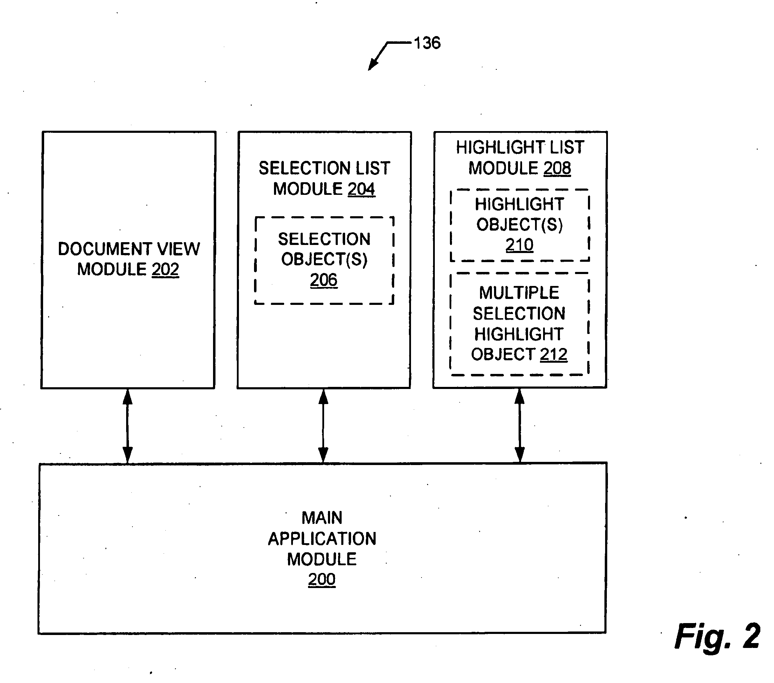

A number of program modules may be stored on hard disk 127, magnetic disk 129, optical disk 131, ROM 124, or RAM 125, including an operating system 135, a document application 136, which will be described in more detail below with respect to Fig. 2, and other applications 137, which may include any type of software application that can be executed by the computing device 120. Program modules can include, but are not limited to, routines, subroutines, programs, objects, components, data structures, etc., which perform particular tasks or implement particular abstract data types.

A user may enter commands and information into computing device 120 through input devices, such as a keyboard 140 and a pointing device 142. Pointing devices may include a mouse, a trackball, or an electronic pen that can be used in conjunction with an electronic tablet. Other input devices (not shown) may include a microphone, joystick, game pad, satellite dish, scanner, or the like. These and other input devices are often connected to processing unit 121 through a serial port interface 146 that can be coupled to the system bus 123, but may be connected by other interfaces (not shown), such as a parallel port, game port, a universal serial bus (USB), or the like. A display device 147 may also be connected to system bus 123 via an interface, such as a video adapter 148. In addition to the monitor, computing devices may include other peripheral output devices (not shown), such as speakers and printers.

The computing device 120 may operate in a networked environment using logical connections to one or more remote computers 149. Remote computer 149 may be another personal computer, a server, a client, a router, a network PC, a peer device, or other common network node. While a remote computer 149 typically includes many or all of the elements described above relative to the computing device 120, for simplicity, only a memory storage device 150 has been illustrated in Fig. 1. The logical connections depicted in Fig. 1 may include a local area network (LAN) 151 and a wide area network (WAN) 152. Such networking environments are commonplace in offices, enterprise-wide computer networks, intranets, and the Internet.

When used in a LAN networking environment, the computing device 120 is often connected to the local area network 151 through a network interface or adapter 153. When used in a WAN networking environment, the computing device 120 typically includes a modem 154 or other means for establishing communications over WAN 152, such as the Internet. Modem 154, which may be internal or external, can be connected to system bus 123 via serial port interface 146. In a networked environment, program modules depicted relative to computing device 120, or portions thereof, may be stored in the remote memory storage device 150. For example, the remote memory storage device 150 may store document application 136 and other applications 137 or portions thereof. It will be appreciated that the network connections shown are exemplary and other means of establishing a communications link between the computers may be used.

Moreover, those skilled in the art will appreciate that the present invention may be implemented in other computer system configurations, including hand-held devices, multiprocessor systems, microprocessor based or programmable consumer electronics, network person computers, minicomputers, mainframe computers, and the like. The invention may also be practiced in distributed computing environments, where tasks are performed by remote processing devices that are linked through a communications network. In a distributed computing environment, program modules may be located in both local and remote memory storage devices.

### Exemplary Architecture of System

Referring now to Fig. 2, a block diagram of an exemplary component architecture of the document application 136 (from Fig. 1) is illustrated in accordance with various exemplary embodiments of the present invention. The document application 136 may be any software application that can be used to create and/or manipulate (or modify, edit, etc.) objects in a document (or a page, file, etc.) using, for example, a computing device 120 (Fig. 1). For example, the document application 136 may be configured to create and/or manipulate objects in a drawing, word processing document, spreadsheet, desktop publishing project, webpage, etc. Furthermore, an object may include any object that can be added to and/or manipulated in a document (or a display device, graphical user interface, etc.) such as, but not limited to, a graphical object, text, control, etc.

The exemplary document application architecture 136 can include a main application module 200. The main application module 200 may provide numerous functions and/or capabilities related to the document application 136 such as, but not limited to, creating, manipulating, viewing, or saving a document. The main application 200 may also function to control or assist the functions of other modules of the document application 136. Furthermore, the main application module 200 may function as an interface between other modules of the document application 136.

The exemplary document application architecture 136 can also include a document view module 202. The document view module 202 may function to display a document (or page, file, etc.) through a user output interface such as the monitor 147 (Fig. 1). The document module 202 may control or assist functions related to manipulating one or more objects contained in a document. The document view module 202 may also control or assist the functions of other modules in the exemplary document application architecture 136.

A selection list module 204 may also be included as part of the exemplary document application architecture 136. The selection list module 204 may create and/or store information about objects in a document. For example, the selection list module 204 may create and/or store one or more selection object(s) 206. Selection object(s) 206 may include information about and/or related to one or more objects that have been selected in a document. The selection list module 204 may provide the selection object(s) 206 to one or more modules of the document application to assist in creating, manipulating, and/or displaying objects in a document.

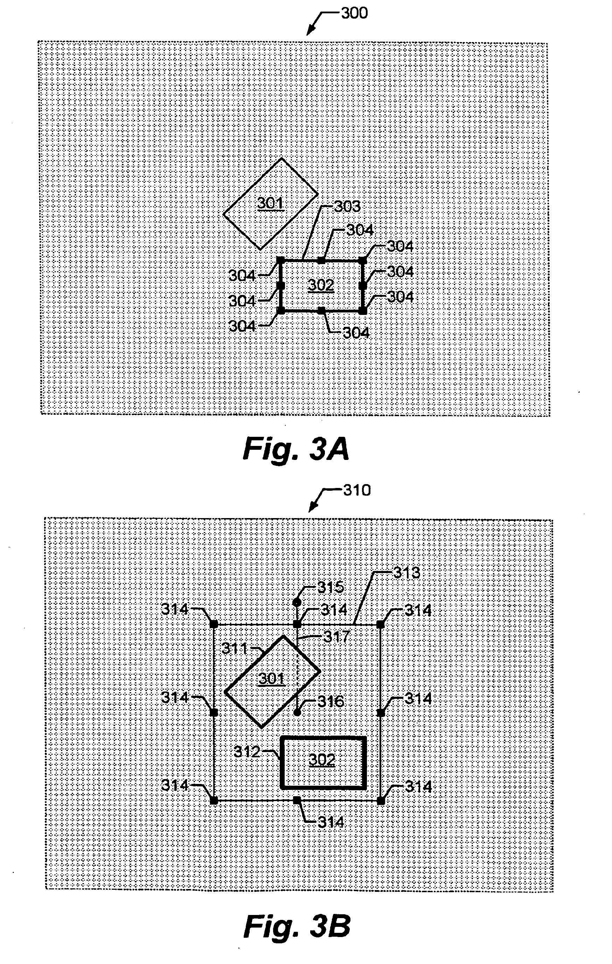

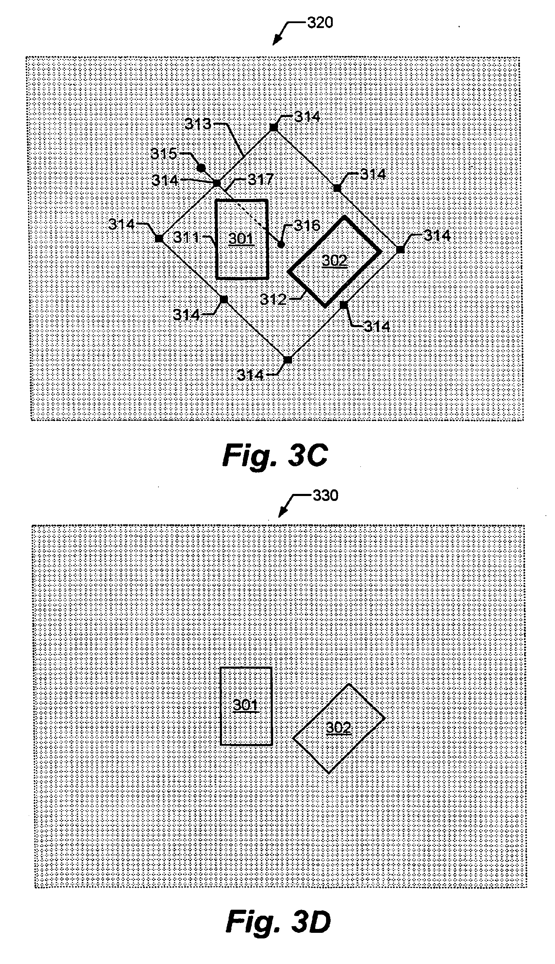

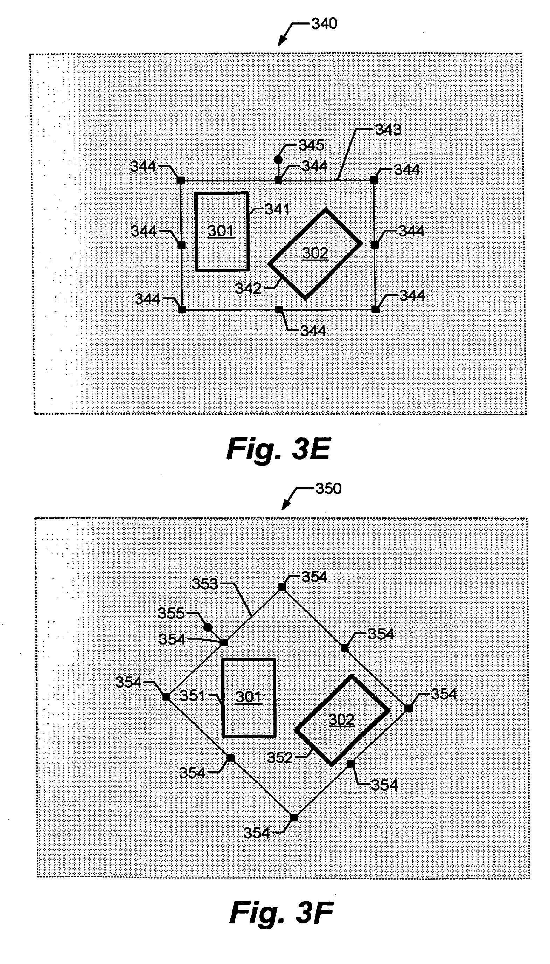

A highlight list module 208 may also be included in the exemplary document application architecture 136. The highlight list module 208 may also create and/or store information about objects in a document. More specifically, the highlight list module 208 may create and/or store highlight feedback of one or more objects that have been selected. For example, the highlight list module 208 may create and/or store highlight object(s) 210. Highlight object(s) 210 may include information about or related to highlight feedback for one or more objects selected in a document. In this regard, highlight feedback may include any outline or other modification of an object for the purpose of indicating that the object has been selected. For example, the highlight feedback may include a bold outline and/or an outline that is a different color from other objects in the document. As will be discussed with respect to Figs. 3 through 7 below, the highlight feedback may also include other indicators that can assist in manipulating the object, such as various handles and reference elements.

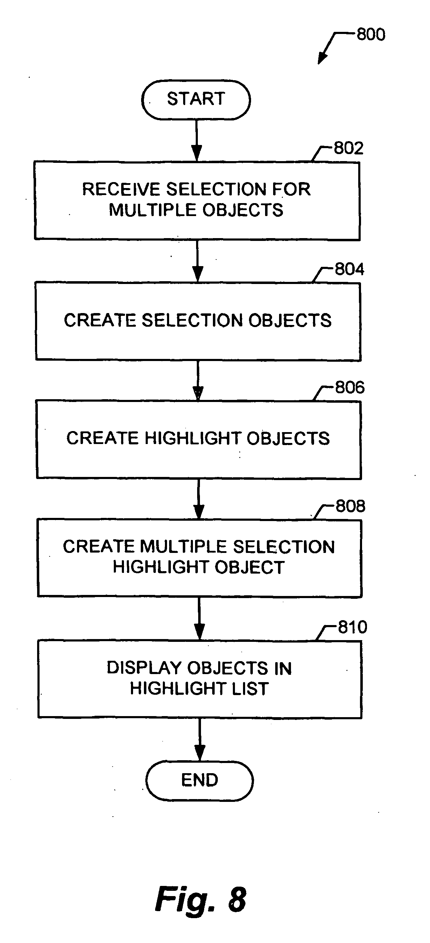

The highlight list module 208 may also create and/or store one or more multiple selection highlight objects 212. Typically, the highlight list module 208 may create and/or store one multiple selection highlight object 212, as depicted, but it should be understood that there may be additional multiple selection highlight objects 212 in accordance with some exemplary embodiments of the present invention. The multiple selection highlight object 212 may include information about or related to highlight feedback for multiple (e.g., two or more) objects selected in a document. In that regard, the multiple selection highlight object 212 may include information from one or more highlight objects 210. For example, the highlight list module 208 may create a multiple selection highlight object 212 from two or more highlight objects 210. Additional functions and/or other features of the foregoing components 202, 204, 206, 208, 210, 212 of the exemplary document application architecture 136 will be described below with respect to Figs. 8 through 16.

### Exemplary Screen Views

Figs. 3 through 7 illustrate exemplary screen views, which provide examples of the capability to select and manipulate multiple objects in accordance with exemplary embodiments of the present invention. These screen views may, for example, be viewed through the monitor 147 of the exemplary computing device 120 (Fig. 1) For simplicity and clarity, the number and properties (e.g., shape, size, orientation, etc.) of the objects are illustrated by a few examples in these figures. Furthermore, only certain manipulation operations are illustrated in these figures for simplicity and clarity as well. However, it should be understood that exemplary embodiments of the present invention are not limited to these examples, and many other features and operations (e.g., moving, deleting, etc.) are possible as will be apparent to those skilled in the art.

Referring now to Figs. 3A-3F, exemplary screen views 300, 310, 320, 330, 340, 350 are shown illustrating the selection and rotation related manipulation of multiple objects 301, 302 in accordance with various exemplary embodiments of the present invention. In that regard, Fig. 3A shows an exemplary screen view 300 with two objects 301, 302 rendered to it. In accordance with exemplary embodiments of the invention, one object 302 has been selected. As will be discussed with respect to Figs. 8 through 16, the object 302 may be selected using a user input interface such as the mouse 142 or keyboard 140 (Fig. 1).

The selected object 302 initially had an appearance similar to object 301, except at a different angular orientation. In that regard, the term "standard orientation" will be used hereafter to describe a typical orientation (e.g., upright) of an object such that one or more of its edges are parallel to one or more of a fully vertical axis (e.g., 90 degrees from full horizontal) and a fully horizontal axis (e.g., 90 degrees from full vertical). For example, object 302 is positioned in a standard orientation, while object 301 is rotated out of the standard orientation. Other terms may be applicable to refer to the standard orientation, such as upright, orthogonal, etc., which can all be applicable terms within the scope of the exemplary embodiments of the present invention.

As briefly discussed above with respect to the highlight list module 208 and highlight object(s) 210, the selected object 302 includes highlight object 303, which in this exemplary illustration includes a bolded outline of the object 302. The highlight object 303 also includes various handles 304. These handles 304 can be used to manipulate the object 302. For example, one of the handles 304 may be selected and dragged using an input interface, such as a mouse 142, to resize the object 302.

Fig. 3B shows an exemplary screen view 310 in which both objects 301 and 302 are selected. Thus, Fig. 3B may illustrate a continuation of the selection of multiple objects 301, 302 after the selection of object 301 illustrated in Fig. 3A. In contrast to the appearance of the object 301 in Fig. 3A, both objects 301, 302 include highlight objects 311, 312 respectively. In accordance with some exemplary embodiments of the present invention, the highlight object 312 of object 302 may have a different, for example bolder, highlight appearance to indicate that it was the first object 302 selected during the selection of multiple objects 301, 302. In this regard, the first selected object 302 may be referred to as the primary selection object 302, the significance of which will be discussed further with regard to Figs 3E and 3F. However, it is noted, in accordance with some exemplary embodiments of the invention, that the highlight objects 311, 312 of the multiple selected objects 301, 302 may not include handles (as depicted) like the handles 304 illustrated in Fig. 2A.

In addition to the highlight objects 311, 312, both objects 301, 302 are contained within a multiple selection highlight object 313. As shown, the multiple selection highlight object may be a bounding box or similar surrounding border. The multiple selection highlight object 313 can include handles 314 that may provide the same features as the handles 304 described for Fig. 3A. The multiple selection highlight object 313 may also include a rotation handle 315 and an axis pin 316, which may be connected by a connecting line 317. In some exemplary embodiments, the axis pin 316, and sometimes also the connecting line 317, may be configured to appear when a user interface, such as a visual icon controlled by a mouse 142 or keyboard 140, is placed in the vicinity of the rotation handle 315. Functions of the rotation handle 315 and axis pin 316 will be discussed with respect to subsequent figures.

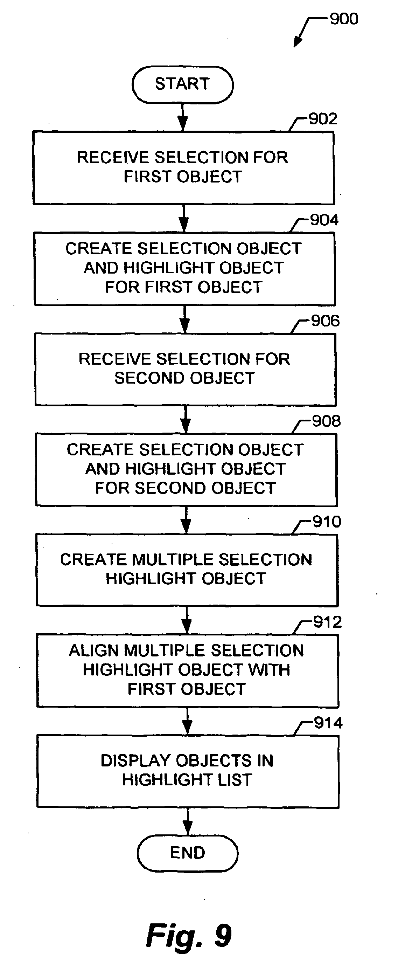

With respect to Fig. 3B, it should be noted that, in accordance with exemplary embodiments of the present invention, the multiple selected objects 301, 302 can be selected in at least two different ways. In that regard, exemplary processes for such selection options will be discussed below with respect to Figs. 8 and 9. These selection options may include a sequential multiple selection operation (e.g., one by one, manual, etc.) and a continuous multiple selection operation (e.g., using a lasso or other selection perimeter). Whether selected in either manner, object 302, as the primary selection object, was selected first based on the exemplary illustration of Fig. 3B.

However, in contrast to existing approaches of selecting and manipulating multiple objects, the multiple selection highlight object 313 can automatically appear around the multiple selected objects 301, 302 without the need to perform a transformation or grouping of the selected objects 301, 302. Thus, the multiple selected objects 301, 302 can be manipulated with respect to a common reference (e.g., axis pin 316) and/or by a single operation (e.g., movement of one of the handles 314 or the rotation handle 315) without the need to first perform operations to group the selected objects 301, 302 as with existing approaches. It is also noted for future reference that the multiple selection highlight object 313 is provided in the standard orientation, which is also aligned with the primary selected object 302 in the exemplary illustration of Fig. 3B.

Focusing now on Fig. 3C, an exemplary screen view 320 is shown illustrating the multiple selected objects 301, 302 rotated from the standard orientation in accordance with exemplary embodiments of the present invention. In this regard, the multiple selected objects 301, 302 are rotated about a common reference (or axis pin) 316 from their initial positions and orientations. Furthermore, the multiple selected objects 301, 302 are rotated by a single operation, for example, by using a user interface to select and drag the rotation handle 315 in the desired direction and distance of rotation.

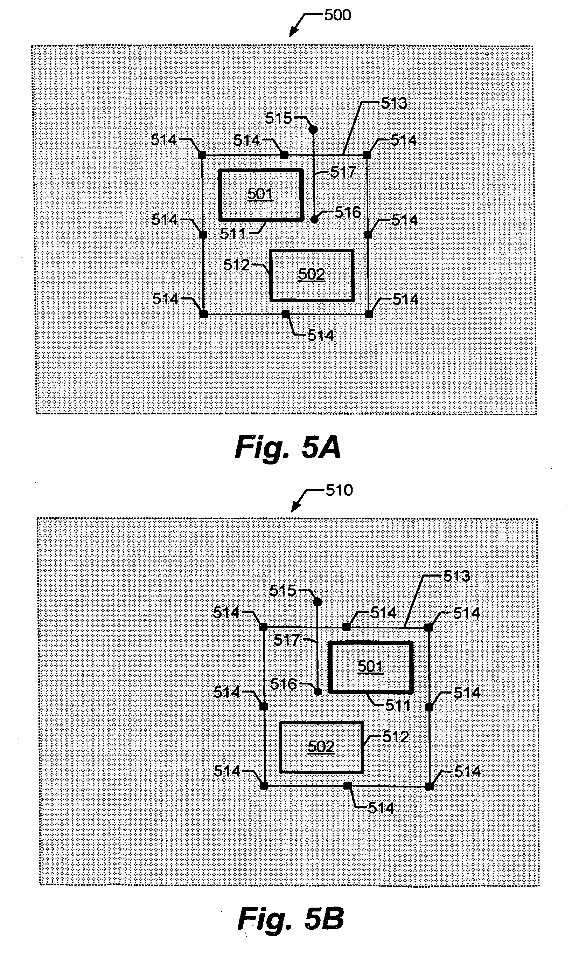

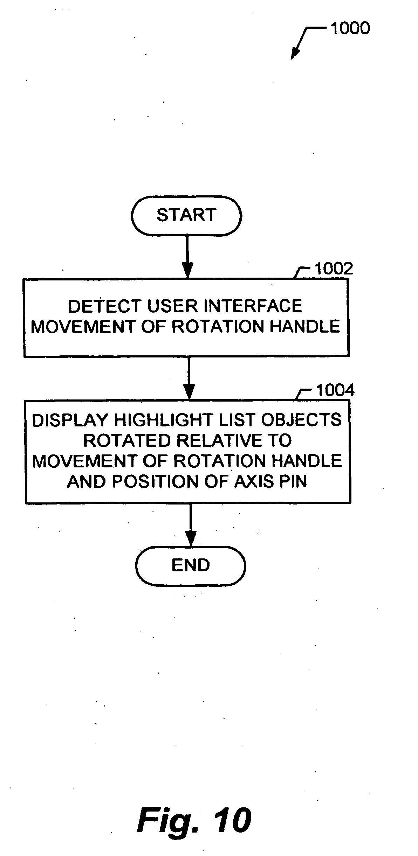

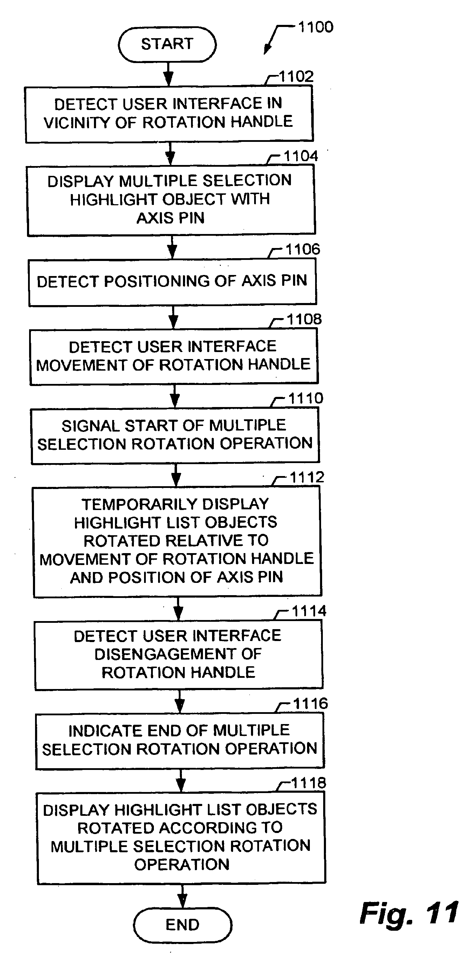

It is noted that the multiple selection highlight object 313 also rotates in accordance with the movement of the rotation handle 315 and that it can maintain its initial alignment to the multiple selected objects 301, 302, for example, to the primary selected object 302. As will be discussed further with respect to Figs. 5A and 5B, the axis pin 316 can be repositioned to change the common reference for manipulation of the multiple selected objects 301, 302. Thus, the axis pin 316 can be repositioned so that the multiple selected objects can be rotated about a reference point located at some position other than the (approximate) center of the multiple selected objects 301, 302. The functions involved with the rotation of the multiple selected objects 301, 302 depicted in Fig. 3C will be discussed further with respect to Figs. 10 and 11.

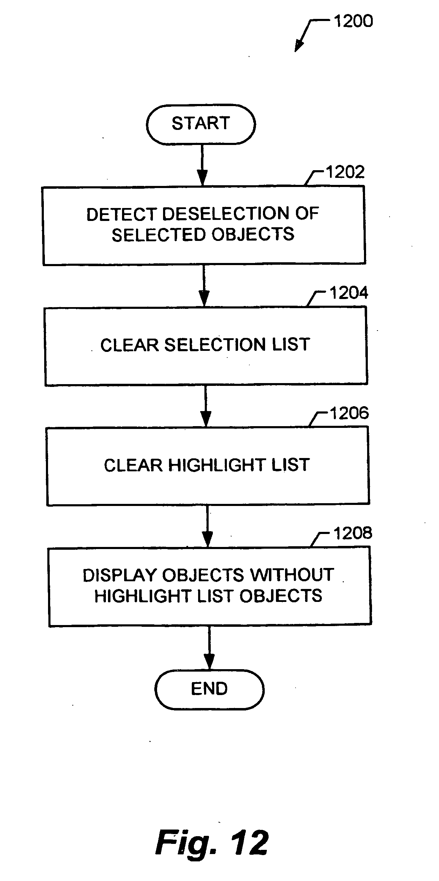

Fig. 3D illustrates an exemplary screen view 330 of the objects 301, 302 after they have been deselected following the rotation operation depicted in Fig. 3C. Thus, the objects 301, 302 are rotated to their new orientation with respect to the standard orientation. As a result of the deselection of the objects 301, 302, the highlight objects 311, 312 and multiple selection highlight object 313 are removed from the exemplary screen view 330. Moreover, in contrast to the limitations of existing approaches, the deselected objects 301, 302 can be individually manipulated without the need to perform a transformation to ungroup the objects after the multiple selection rotation operation. An exemplary process for deselecting multiple selected objects 301, 302 will be discussed further with respect to Fig. 12.

Fig. 3E illustrates an exemplary screen view 340 in which objects 301, 302 have been selected by a multiple selection operation after the deselection operation illustrated in Fig. 3D. Similar to the multiple selection of objects 301, 302 illustrated in Fig. 3B, both objects 301, 302 include highlight objects 341, 342, respectively, and are bounded by a multiple selection highlight object 343. Furthermore, multiple selection highlight object 343 includes selection handles 344 and rotation handle 345. However, in contrast to Fig. 3B, the multiple selection highlight object 343 does not include an axis pin or connecting line. As discussed above for Fig. 3B, these elements can be configured to appear when a user interface is placed in the vicinity of the rotation handle 345 in accordance with some exemplary embodiments of the present invention.

In addition to the foregoing differences of the illustration of Fig. 3E to the above described Fig. 3B, it is also noted that the multiple selected objects 301, 302 have been rotated from their original orientations in Fig. 3B, as discussed above for the rotation operation illustrated in Fig. 3C. Similar to Fig. 3B, however, object 302 is the first selected or primary selection object of the multiple selection, as indicated by the bolder highlight object 342 for object 302. Yet the multiple selection highlight object 343 is not aligned to the orientation of object 302, which is rotated out of the standard orientation, but is instead aligned with object 301, whose sides happen to be aligned with the standard, upright orientation. An explanation for this difference follows below.

Exemplary embodiments of the present invention can provide for the multiple selection highlight object 343 to align to the orientation of the primary selection object 302, which is a distinction from the limitations of existing approaches. However, in some of the exemplary embodiments, for example, as illustrated by Fig. 3E, the multiple selection highlight object 343 may orient to a default orientation, such as the standard orientation, for some cases of a multiple selection operation. For example, in accordance with some exemplary embodiments of the present invention, the multiple selection highlight object 343 may default to the standard orientation when the objects 301, 302 are selected by a continuous multiple selection operation (e.g., using a lasso or other selection perimeter). Thus, as depicted in Fig. 3E, the objects 301, 302 may have been selected by a continuous multiple selection operation in which object 302 was enclosed first, for example, by a lasso or selection perimeter, in accordance with some exemplary embodiments of the invention. In other exemplary embodiments, however, the multiple selection highlight object 343 may align to some other default orientation (e.g., a preset orientation) in response to certain multiple selection operations.

Referring now to Fig. 3F, an exemplary screen view 350 is illustrated in which objects 301, 302 have also been selected by a multiple selection operation after the deselection operation illustrated by Fig. 3D, similar to the illustration of Fig. 3E. Thus, the multiple selected objects 301, 302 include highlight objects 351, 352, respectively, and the bolder highlight object 352 indicates that object 302 is the primary selection object. Furthermore, the multiple selected objects 301, 302 are bounded by multiple selection highlight object 353, which includes handles 354 and rotation handle 355.

In contrast to Fig. 3E however, the multiple selection highlight object 353 illustrated in Fig. 3F is not aligned with the standard orientation and instead is aligned with orientation of object 302. This is because, as discussed above, in some exemplary embodiments of the present invention, the multiple selection highlight object 353 can align with the primary selection object (object 302 in this example) in response to certain multiple selection operations. For example, if a sequential multiple selection operation is performed on objects 301, 302 in which object 302 is first selected (making it the primary selection object), the multiple selection highlight object 353 can automatically align to the orientation of the primary selection object 302. This is a beneficial distinction over the limitations of existing approaches, for example, because it allows a user to manipulate multiple selected objects 301, 302 with respect to the orientation of an object 302 that is rotated out of the standard orientation.

Thus, Figs. 3E and 3F provide exemplary illustrations of the capability, according to exemplary embodiments of the present invention, for the multiple selection highlight object 343, 353 to automatically align to different orientation references (e.g., the standard orientation or the primary selection object orientation) in response to, for example, the type of multiple selection operation that is performed (e.g., continuous or individual multiple selection operations). For simplicity, the objects 301, 302 used in these illustrations have sides that correspond to a fully vertical axis and a fully horizontal axis (i.e., the sides are perpendicular and/or squared). Thus, the multiple selection highlight object 343, 353, which also has perpendicular sides in the illustrations, can be readily aligned to either one of the objects 301, 302 by positioning the sides in parallel.

However, it is noted that neither the multiple selection highlight object 343, 353 nor the multiple selected objects 301, 302 need to have an essentially square or rectangular shape to fall within the scope of the exemplary embodiments of the present invention. Thus, the multiple selection highlight object 343, 353 and the multiple selected objects 301, 302 may have any other conceivable shape according to the scope of the exemplary embodiments of the present invention, although an essentially square or rectangular shape for the multiple selection highlight object 343, 353 is typical. In cases where the multiple selected objects 301, 302 have other shapes, for example, which include curves, text, or other than four squared sides, the multiple selection highlight object 343, 353 may align to the highlight object 351, 352 of the primary selection object 302 regardless of the actual shape of the object 302. For example, the highlight objects 341, 342, 351, 352 may typically each include four squared sides regardless of the shapes of the objects 301, 302, thereby simplifying the alignment of a multiple selection highlight object 343, 353 that also has four squared sides to one of the selected objects 301, 302.

In such examples, the highlight objects 341, 342, 351, 352 may bound or at least partially surround a portion of the non-square or non-rectangular objects 301, 302, for example, similar to a square bounding the perimeter of a circle. However, the scope of the exemplary embodiments of the present invention are not limited to the foregoing examples, as will be apparent to those skilled in the art. For example, alignment of the multiple selection highlight object 343, 353 to one of the highlight objects 341, 342, 351, 352 may be facilitated by using other shapes for both the multiple selection highlight object 343, 353 and the highlight objects 341, 342, 351, 352, such as circular or octagonal.

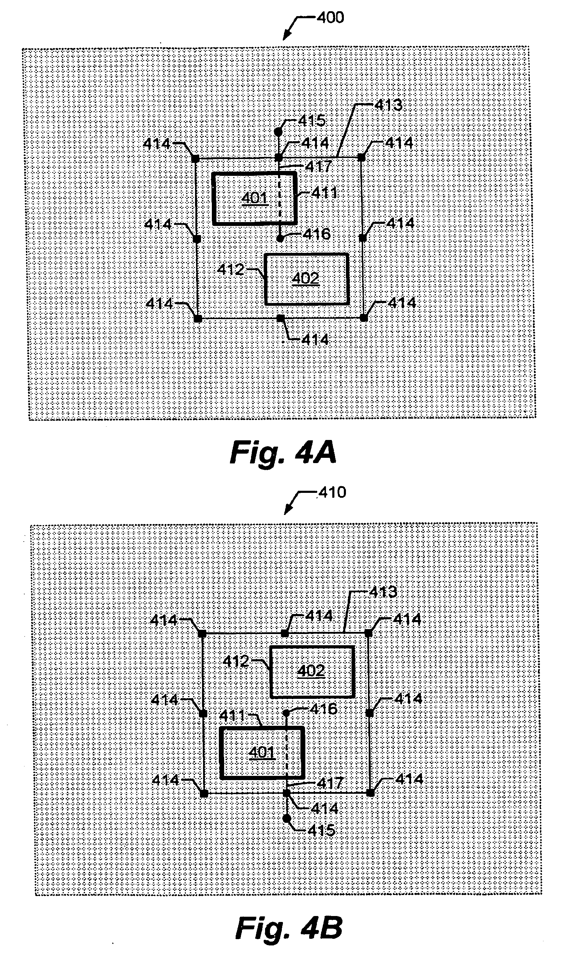

Attention is now focused on Figs. 4A-4B, which illustrate exemplary screen views 400, 410 depicting the selection and vertical flip related manipulation of multiple objects 401, 402 in accordance with various exemplary embodiments of the present invention. In that regard, Fig. 4A illustrates exemplary screen view 400 in which objects 401, 402 have been selected by a multiple selection operation, similar to the previously discussed objects 301, 302 in Fig 3B. Accordingly, the multiple selected objects 401, 402 are bounded respectively by highlight objects 411, 412. As indicated by the bolder highlight object 411, objects 401 is the primary selected object.

The multiple selected objects 401, 402 are also bounded accordingly by multiple selection highlight object 413. The multiple selection highlight object 413 also includes selection handles 414 and a rotation handle 415. Furthermore, the multiple selection highlight object 413 includes an axis pin 416 and a connection line 417. These elements are all at least substantially similar to the like-named elements discussed with respect to Figs. 3A-3F above.

As discussed above, the axis pin 416 and connection line 417 may appear when a user interface is positioned in the vicinity of the rotation handle 415 according to some exemplary embodiments of the present invention. Although the axis pin 416 can represent a reference for rotation of the multiple selected objects 401, 402, as discussed for Fig. 3C, the axis pin 416 may also serve as a reference for a flip operation of the multiple selected objects 401, 402. In this regard, a flip operation may include an operation to replace the image of the multiple selected objects 410, 402 with a mirror image of the objects 401, 402 along a certain reference direction (e.g., vertical or horizontal). In accordance with exemplary embodiments of the present invention, a flip operation may additionally be performed in reference to the position of the axis pin 416 as will be illustrated by comparison of Figs. 4A and 4B, as well as Figs. 5A and 5B (discussed below).

Thus, referring to Fig. 4B, an exemplary screen view 410 is shown, which illustrates the performance of a vertical flip operation on multiple selected objects 401, 402 from their original position and orientation in Fig. 4A. In this regard, it is noted that the multiple selected objects 401, 402 are flipped along a vertical reference axis (not depicted) with respect to the axis pin 416. Thus, the axis pins 416 in Figs. 4A and 4B are in the same position in the exemplary views 400, 410, and the multiple selected objects 401, 402 are in mirror image positions as if they were lifted as a group and flipped over from top to bottom with respect to the axis pin 416. Furthermore, the multiple selection highlight object 413 and associated elements 414, 415, 417 are also repositioned in a mirror image manner with respect to the axis pin 416 as a result of the illustrated vertical flip operation.

It is noted that in contrast to the limitations of existing approaches, the multiple selected objects 401, 402 illustrated in Fig. 4A can be selected and flipped with respect to the common reference of the axis pin 416 without the need to first perform operations to transform the objects 401, 402 into a single grouped object. Moreover, as discussed above with respect to Fig. 3D, the flipped objects 401, 402 in Fig. 4B can be immediately deselected and individually manipulated without the need to perform a transformation to ungroup the objects 401, 402 as is needed with existing approaches.

Turning to Figs. 5A-5B, exemplary screen views 500, 510 are presented, which illustrate the selection and horizontal flip related manipulation of multiple objects 501, 502 in accordance with various exemplary embodiments of the present invention. In that regard, Fig. 5A illustrates an exemplary screen view 500 of multiple selected objects 501, 502. Similar to Fig. 4A, the multiple selected objects 501, 502 include highlight objects, 511, 512, respectively. Furthermore, the multiple selected objects are bounded by a multiple selection highlight object 513, which includes selection handles 514, a rotation handle 515, an axis pin 516, and connection line 517.

However, in contrast to Fig. 4A, Fig. 5A illustrates an example in which the axis pin 516 has been repositioned from its typical location at the center or approximate center of the multiple selection highlight object 513. In accordance with some exemplary embodiments of the present invention, the rotation handle 515 and connection line 517 can automatically reposition to correspond to the repositioning of the axis pin 516 as also illustrated. The repositioning of the axis pin 516 may be performed in order to provide a different reference point for operations such as rotating or flipping the multiple selected objects 501, 502. In contrast, existing approaches are typically limited to providing a centered or near centered reference axis for grouped objects.

The axis pin 516 may be positioned in many manners, which will be apparent to those skilled in the art. For example, the axis pin 516, or possibly the connection line 517, can be selected and dragged using a user interface to reposition the axis pin 516 to a desired location. As discussed above, the axis pin 516 and/or connection line 517 may appear when a user interface is placed in the vicinity of the rotation handle 515. Thus, in some exemplary embodiments, the axis pin 516 may be repositioned by first placing the user interface in the vicinity of the rotation handle 515 to cause the axis pin 516 and/or connection line 517 to appear.

Turning now to Fig. 5B, an exemplary screen view 510 is shown, which illustrates the performance of a horizontal flip operation of multiple selected objects 501, 502 from their original position and orientation in Fig. 5A. It is noted in this regard that the multiple selected objects 501, 502 are flipped along a horizontal reference axis (not depicted) with respect to the axis pin 516. Therefore, the axis pins 516 in Figs. 5A and 5B are in the same position in the exemplary views 500, 510. Furthermore the multiple selected objects 501, 502 and the multiple selection highlight object 513, including associated elements 514, 515, 517, are in mirror image positions as if they were all lifted as a group and flipped over from left to right with respect to the axis pin 516.

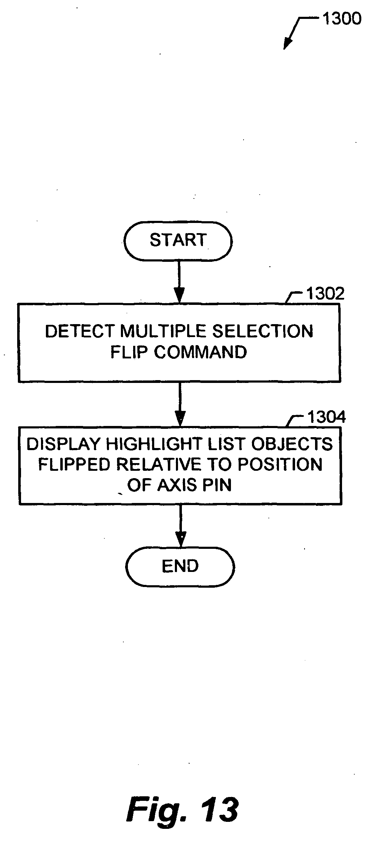

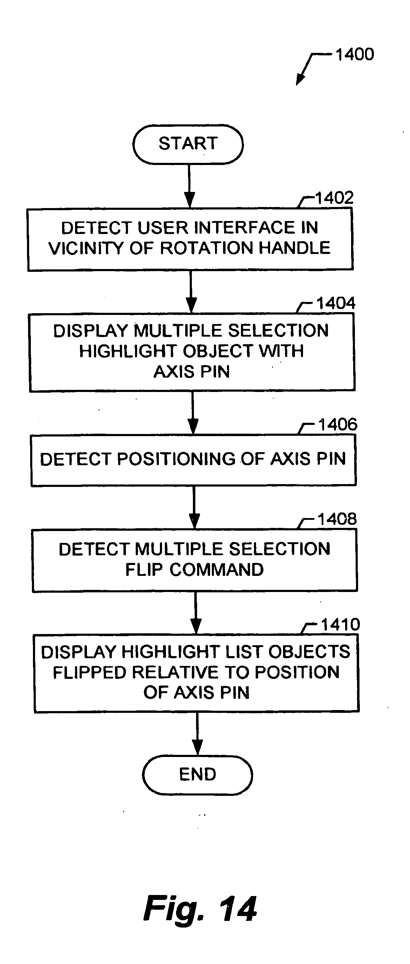

Since the axis 516 was repositioned to the right of the center position of the multiple selection highlight object 513, all of the flipped elements are also positioned at a horizontal offset from the original position of the multiple selection highlight object 513 in Fig. 5A. Thus, the horizontal flip operation illustrated by Figs. 5A and 5B also exemplifies the benefit gained by the capability to reposition the axis pin 516 in contrast to the limitations of existing approaches. Similar benefits can be obtained by repositioning the axis pin for other multiple selection operations, including the vertical flip operation discussed for Figs. 4A-4B and the rotation operation discussed for Figs. 3A-3F. Exemplary processes for performing the exemplary flip operations described above for Figs. 4A-5B will be discussed below with respect to Figs. 13 and 14.

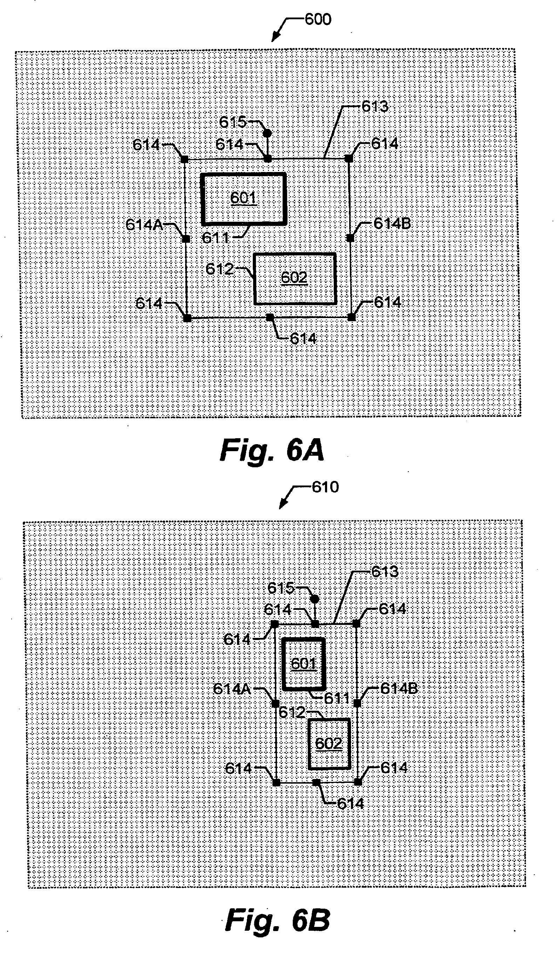

Attention is now directed to Figs. 6A-6D, which present exemplary screen views 600, 610, 620, 630 illustrating the selection and resize related manipulation of multiple objects 601, 602 in accordance with various exemplary embodiments of the present invention. Fig. 6A illustrates an exemplary screen view 600 of multiple selected objects 601, 602, which is similar to the previously discussed Figs. 4A and 5A. Thus, the multiple selected objects 601, 602 include highlight objects 611, 612, respectively, and are bounded by multiple selection highlight object 613, which includes selection handles 614, 614A, 614B and rotation handle 615.

It is noted that, in accordance with some exemplary embodiments of the present invention, an axis pin and connecting line are not visible in the exemplary screen view 600, although they can appear, for example, if a user interface is placed in the vicinity of the rotation handle 615. It is further noted with regard to various exemplary embodiments of the present invention that although an axis pin may not be visible in a screen view of multiple selected objects, the reference provided by the axis pin can still be available and relied upon for operations performed on the multiple selected objects. Thus, the axis pin and/or connection line may be hidden in some instances according to exemplary embodiments of the invention.

Turning now to Fig. 6B, an exemplary screen view 610 is illustrated in which the multiple selected objects 601, 602 have been resized by horizontal compression of the objects 601, 602. This exemplary horizontal resize operation can be performed, for example by selecting and dragging one of the horizontal selection handles 614A or 614B in the desired direction of compression with a user interface, such a mouse 142 or keyboard 140 (Fig. 1). It is noted that in contrast to existing approaches, the multiple selected objects 601, 602 remain in the same relative positions to each other after the resize operation since the multiple selected objects 601, 602 can be manipulated as if they were a single combined object in accordance with exemplary embodiments of the present invention. In some existing approaches, this feature might be available if the selected objects are first transformed into a new grouped object. However, as discussed several times above, exemplary embodiments of the present invention provide the advantageous feature of multiple selection operations without the need to first perform grouping transformation, which must later be reversed in order to manipulate the individual objects.

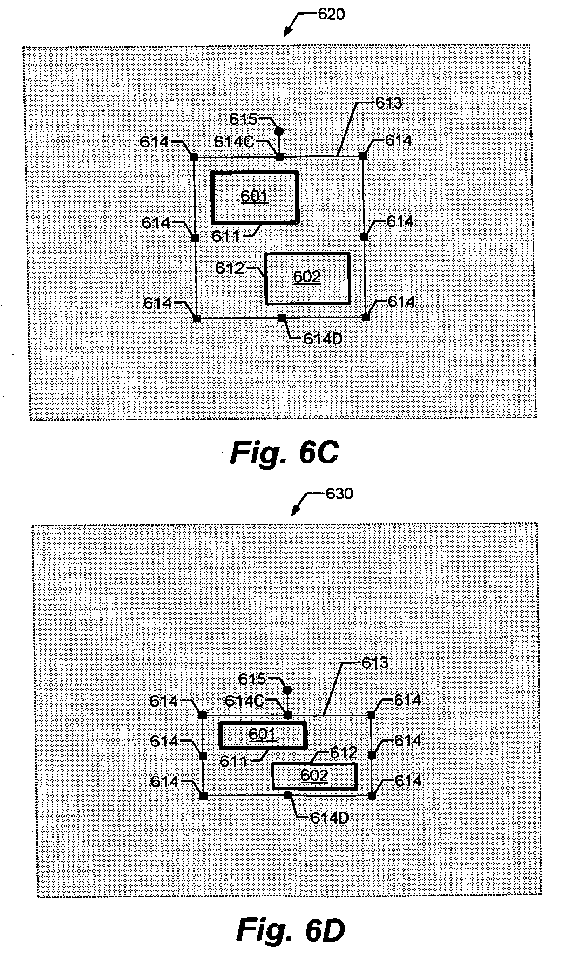

Fig. 6C illustrates an exemplary screen view 620 of multiple selected objects 601, 602, which is similar to the above discussed Fig. 6A. In that regard, the multiple selected objects 601, 602 include highlight objects 611, 612, respectively, and are bounded by multiple selection highlight object 613, which includes selection handles 614, 614C, 614D and rotation handle 615. Furthermore, the axis pin and connection line are hidden in the exemplary screen view 620 in accordance with the foregoing discussion with respect to Fig. 6A.

Moving then to Fig. 6D, an exemplary screen view 630 is presented in which the multiple selected objects 601, 602 illustrated in Fig. 6C have been resized by vertical compression of the objects 601, 602. This exemplary vertical resizing of the multiple selected objects can be performed, for example, by selecting and dragging one of the vertical selection handles 614C or 614D in the desired direction of compression with a user interface. As noted with respect to the horizontal resize operation illustrated in Fig. 6B, the multiple selected objects 601, 602 remain in the same relative positions to each other after the vertical resize operation illustrated in Fig. 6D since the multiple selected objects 601, 602 can be manipulated as if they were a single combined object in accordance with exemplary embodiments of the present invention.

In the exemplary resize operations illustrated in Figs. 6A-6D, the multiple selected objects 601, 602 were aligned with the standard orientation and the multiple selection highlight object 613 was accordingly aligned with the standard orientation, as well as with the primary selection object 601. Thus, a horizontal resize operation in such examples involved resizing of the horizontal dimensions of the multiple selected objects 601, 602, and the vertical resize operation in such examples involved resizing of the vertical dimensions of the multiple selected objects 601, 602. It is also noted that in addition to the above example of compressing the multiple selected objects 601, 602, the multiple selected objects 601, 602 could also be stretched, for example, by selecting and dragging the applicable selection handles 614A, 614B, 614C, 614D in the appropriate direction. Moreover, other resize operations can be performed on the multiple selected objects 601, 602 by manipulating the appropriate selection handles 614. For example, a proportionate, simultaneous horizontal and vertical resizing (i.e., proportionate resizing) operation can be performed by selecting and dragging one of the selection handles 614 located on the comers of the multiple selection highlight object 613.

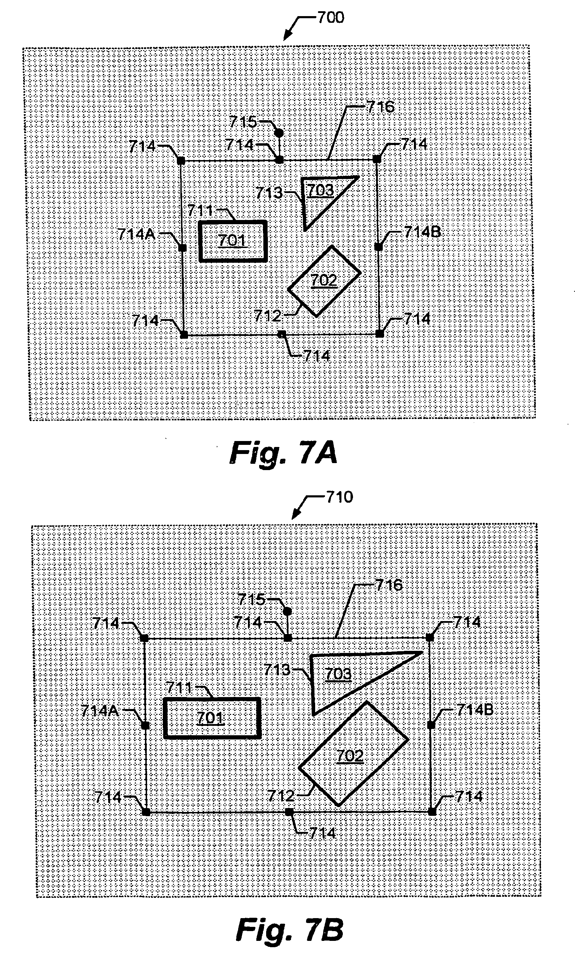

Figs. 7A-7B present exemplary screen views 700, 710, which illustrate the selection and resize related manipulation of multiple objects 701, 702, 703 that are at various orientations in accordance with various exemplary embodiments of the present invention. Thus, in contrast to the multiple selected objects 601, 602 described for Figs. 6A-6D, some of the multiple selection objects 701, 702, 703 are at different orientations than the multiple selection highlight object 716. Focusing specifically on Fig. 7A first, an exemplary screen view 700 of multiple selected objects 701, 702, 703 is illustrated. Similar to the previously discussed multiple selected objects 601, 602 with respect to Fig. 6A, for example, the multiple selected objects 701, 702, 703 include highlight objects 711, 712, 713, respectively. Furthermore, the multiple selected objects are bounded by a multiple selection highlight object 716, which includes selection handles 714, 714A, 714B and a rotation handle 715. An axis pin and connection line are not shown with respect to the multiple selection highlight object 716, however, these elements could appear, for example, if a user interface is placed in the vicinity of the rotation handle 715, as discussed above.

Fig. 7B shows an exemplary screen view 710 in which a horizontal resize operation is performed on the multiple selected objects 701, 702, 703. In this example, the objects 701, 702, 703 have been stretched along a horizontal axis, which can be accomplished by selecting and dragging one of the horizontal selection handles 714A, 714B in the desired direction. As is illustrated in Fig. 7B, object 701, which is in alignment with the multiple selection highlight object 716 is stretched along its horizontal dimension. However, in accordance with exemplary embodiments of the present invention, objects 702, 703, which are not at the same orientation as the multiple selection highlight object 716, are stretched proportionately in both their horizontal and vertical dimensions based on their orientations.

For example, object 702, which is at a nearly diagonal (e.g., 45 degrees) orientation to the multiple selection highlight object 716, is stretched almost equally in both the horizontal and vertical dimensions as a result of the horizontal resizing. In contrast, object 703, which is oriented just slightly out of alignment with the multiple selection highlight object 716, is stretched mostly in the horizontal dimension but also slightly in the vertical dimension, proportionate with the misalignment of the object 703 from the multiple selection highlight object 716. This is another beneficial feature that can be contrasted to the limitations of existing approaches since it reduces or prevents the distortion of the original shape of objects 702, 703, which are not aligned with the multiple selection highlight object 716 during a resize operation. In existing approaches, objects that are not aligned with the direction of resizing are typically distorted, sometimes beyond recognition of the original shapes since these approaches are typically limited to resizing the object in the actual direction of the resize operation (e.g., horizontally or vertically).

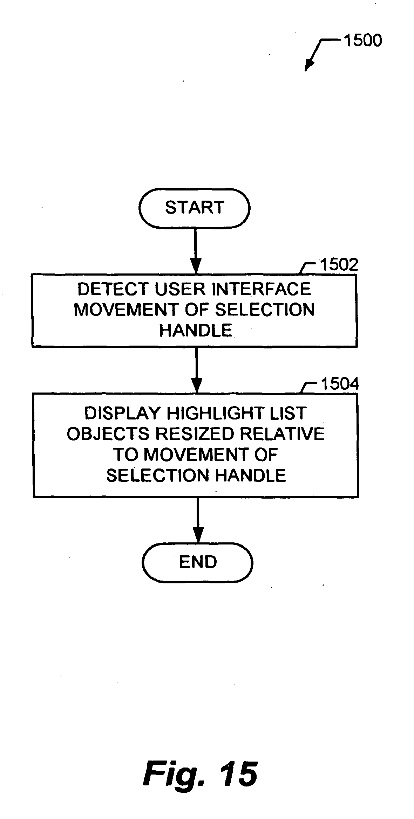

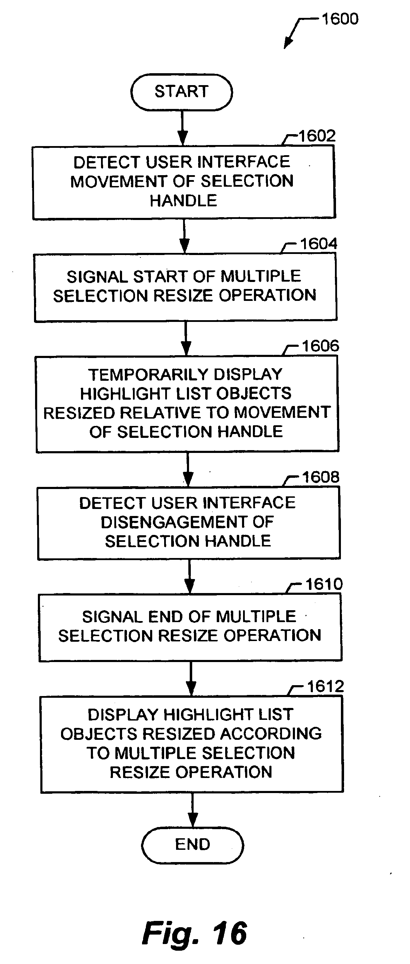

Similar to the resize options discussed with respect to Figs. 6A-6D, the multiple selected objects 701, 702, 703 can also be resized in other manners. For example, the multiple selected objects 701, 702, 703 can also be compressed horizontally or vertically, stretched vertically, and/or stretched or compressed proportionately by manipulating the appropriate selection handles 714, 714A, 714B of the multiple selection highlight object 716. Exemplary processes for performing the exemplary resize operations described above for Figs. 6A-7B will be discussed below with respect to Figs. 15 and 16.

It is noted that any other conceivable operation can be performed on multiple selected objects according to exemplary embodiments of the present invention as if the objects are a single object without the need to perform transformation or grouping operations to the objects. Moreover, although the foregoing examples are presented with respect to two dimensional objects, the concepts may be applied to three dimensional objects in accordance with some exemplary embodiments of the invention.

### Exemplary Processes

In the following discussion of exemplary processes according to exemplary embodiments of the present invention, references may be made to elements of Figs. 1 through 7B as applicable to facilitate the description of exemplary aspects and embodiments of the present invention. However, it should be understood that such references are exemplary and not limiting with respect to the scope of the exemplary embodiments of the present invention. With respect to exemplary processes that are described below and elsewhere, certain steps of these processes may naturally precede others for the exemplary embodiments of the present invention to function as described. However, exemplary embodiments of the present invention are not limited to the order of the steps described, for example, if a different order or sequence can be executed without altering the intended functionality of the exemplary processes. That is, it is recognized that some steps of the exemplary processes described herein may be performed before or after other steps, or in parallel or combination with other steps, without departing from the scope of the exemplary embodiments of the present invention.

In that regard, reference is now made to Fig. 8, which presents a logic flow diagram illustrating an exemplary process 800 for selecting multiple objects 301, 302 (e.g., Fig. 3D) in a continuous multiple selection operation according to various exemplary embodiments of the present invention. In this regard, continuous multiple selection operations were described above, for example, with respect to Figs. 3B and 3E. The exemplary process 800 begins with step 802 in which the document view module 202 can receive a selection input of multiple objects. For example, with respect to Fig. 3E, the document view module 202 can receive the selection information for the objects 301, 302. Typically, the multiple selection of the objects 301, 302 in accordance with this step 802 can be performed as a continuous multiple selection operation using a lasso or other type of selection perimeter, which are known in the art. Furthermore, a user can perform the continuous multiple selection operation, for example, using one or more user interface elements such as the mouse 142 and/or the keyboard 140 (Fig. 1). Furthermore, visual feedback for the operation may be obtained from the monitor 147 (Fig. 1).

Following step 802, in step 804 of the exemplary process 800, the document view module 202 can create selection objects 206 that can be stored in the selection list module 204. As discussed above for Fig. 2, the selection objects 206 can include information about the selected objects 301, 302 that may assist in creating, manipulating, and/or displaying objects in the document 340. In this regard, it should be understood that throughout this document, the function(s) referred to by terms such as "display," "redraw," "repaint," "render," etc., as well as derivatives of such terms, can include anything, including the plain meanings of the terms, that results in making an object, element, etc. visible, viewable, detectable, perceivable, accessible, etc., according to the scope of the exemplary embodiments of the present invention. Moreover, such terms may indicate the addition, replacement, overwriting, or any other applicable manipulation relative to existing objects, elements, etc. that are already visible, viewable, detectable, perceivable, accessible, etc. It should also be understood that although selection object(s) 206 are referred to in this exemplary process 800 and other exemplary processes discussed herein, such exemplary processes may be executed without the involvement of selection object(s) 206 within the scope of some exemplary embodiments of the present invention.

The exemplary process 800 continues on to step 806 in which the document view module 202 can create highlight objects 311, 312 that can be stored in the highlight list module 208. Then, the exemplary process 800 proceeds to step 808 in which the highlight list module 208 can create at least one multiple selection highlight object 313 that can also be stored in the highlight list module 208. The multiple highlight object 212 can be based on the highlight objects 311, 312. In accordance with the previous discussion for Fig. 2, the multiple selection highlight object 313 can be configured to bound the highlight objects 311, 312 as illustrated, for example, in Fig. 3E.

The exemplary process 800 concludes with step 810 in which the document view module 202 can display the highlight objects 341, 342 and multiple selection highlight object 343 as illustrated, for example, in the exemplary screen view 340 of Fig. 3E. Thus, the exemplary process 800 can be executed to progress from the exemplary screen view 330 (Fig. 3D) to the exemplary screen view 340 (Fig. 3E) in response to a continuous multiple selection operation of objects 301, 302.

In accordance with exemplary embodiments of the present invention, it should be understood that the process of creating and of displaying the highlight objects 341, 342 and multiple selection highlight object 343 can occur in the same step, action, function, etc. Therefore, it should be understood here and throughout this document that the step, action, function, etc. of displaying any objects (e.g., 341, 342, 343) may implicitly include the step, action, function, etc. of creating such objects or the converse.

Fig. 9 is a logic flow diagram illustrating an exemplary process 900 for selecting multiple objects 301, 302 (e.g., Fig. 3D) in a sequential multiple selection operation according to various exemplary embodiments of the present invention. Sequential multiple selection operations were also described above, for example, with respect to Figs. 3B and 3F. The exemplary process 900 starts with step 902 in which the document view module 202 can receive a selection input for a first selected object. For example, with respect to Fig. 3F, the document view module 202 can receive the selection information for the object 302. A user can perform this sequential selection of the first object 302, for example, using one or more user interface elements such as the mouse 142 and/or the keyboard 140 (Fig. 1). Furthermore, visual feedback for the operation may be obtained from the monitor 147 (Fig. 1).

After step 902, in step 904 of the exemplary process 900, the document view module 202 can create a selection object 206, which can be stored in the selection list module 204, and a highlight object 352 (e.g., Fig. 3F), which can be stored in the highlight list module 208, to represent the first selected object 302. The exemplary process proceeds to step 906 in which the document view module 202 can receive a selection input for a second selected object, such as the object 301 of Fig. 3F. This selection of the second object 301 can also be performed using one or more user interface elements illustrated in Fig. 1.

Following step 906, in step 908 the document view module 202 can create a second selection object 206, which can also be stored in the selection list module 204, and a second highlight object 351 (e.g., Fig. 3F), which can also be stored in the highlight list module 208, to represent the second selected object 301. The exemplary process 900 then continues with step 910 in which the highlight list module 208 can create at least one multiple selection highlight object 353 that can also be stored in the highlight list module 208 and configured to bound the multiple selected objects 301, 302.

After step 910, the exemplary process 900 proceeds to step 912 in which the highlight list module 208 modifies the multiple selection highlight object 353 to align it with the orientation of the first selected object 302, which is accordingly the primary selection object 302. The exemplary process 900 then concludes with step 914 in which the document view module 202 can display the highlight objects 351, 352 and multiple selection highlight object 353 as illustrated, for example, in the exemplary screen view 350 of Fig. 3F. Thus, the exemplary process 900 can be executed to progress from the exemplary screen view 330 (Fig. 3D) to the exemplary screen view 350 (Fig. 3F) in response to a sequential multiple selection operation of objects 301, 302.

Fig. 10 is a logic flow diagram illustrating an exemplary process 1000 for rotating multiple selected objects 301, 302 (e.g., Fig. 3B) in accordance with various exemplary embodiments of the present invention. The exemplary process 1000 begins with step 1002 in which the document view module 202 detects a movement of the rotation handle 315 of the multiple selection highlight object 313. In this regard, the objects 301, 302 have already been selected, for example, according to one of the exemplary processes 800, 900 described above. The exemplary process 1000 then concludes with step 1004 in which the document view module displays the highlight objects 311, 312 and multiple selection highlight object 313 in an orientation that is rotated relative to the movement of the rotation handle 315 and the position of the axis pin 316. This step 1004 can result in the displaying of the multiple selected objects 301, 302, the highlight objects 311, 312, and the multiple selection highlight object 313 in the manner illustrated in Fig. 3C.

Fig. 11 is a logic flow diagram illustrating another exemplary process 1100 for rotating multiple selected objects 301, 302 (e.g., Fig. 3B) in accordance with various exemplary embodiments of the present invention. The exemplary process 1100 starts with step 1102 in which the document view module 202 detects a user interface in the vicinity of the rotation handle 315. The exemplary process 1000 proceeds to step 1104 in which the document view module 202 displays the multiple selection highlight object 313 to include the axis pin 316 and, according to some exemplary embodiments, also the connecting line 317 that connects the rotation handle 315 to the axis pin 316. This can result in the displaying of the multiple selection highlight object 313 withh the axis pin 316 and the connecting line 317 as illustrated in Fig. 3B.

After step 1104, the exemplary process 1000 proceeds to step 1106 in which the document view module 202 detects the positioning of the axis pin 316. For example, a user may utilize a user interface, such as the mouse 142 and/or the keyboard 140, to select and reposition the axis pin 316. In that regard, Fig. 5A illustrates an exemplary screen view 500 in which an axis pin 516 has been repositioned from the typical center position of the multiple selection highlight object 513. Following step 1106, the document view module 202 can detect the movement of the rotation handle 315 (e.g., Fig. 3B) by a user interface.

The exemplary process 1100 proceeds from step 1108 to step 1110 in which the document view module 202 signals the highlight list module 208 of the start of a multiple selection rotation operation. As a result of this step 1110, the highlight list module 208 can temporarily update the orientation of the highlight objects 311, 312 and the multiple selection highlight object 313 relative to the movement of the rotation handle 315. This allows the rotation operation to be aborted, thereby automatically returning the highlight objects 311, 312 and the multiple selection highlight object 313 to their original orientation, without the need to perform reverse or "undo" operations. This feature can be beneficial, for example, when a rotation operation is aborted, by reducing the needed operations by the user and/or the highlight list module 208 to restore the highlight objects 311, 312 and the multiple selection highlight object 313 to the original orientation they had before the rotation operation was started.

Following step 1110, in step 1112, the document view module 202 temporarily displays the highlight objects 311, 312 and the multiple selection highlight object 313 in an orientation that is rotated relative to the movement of the rotation handle 315 with respect to the axis pin 316. For example, if the rotation handle 315 is dragged to a 45 degree counter-clockwise position, the document view module 202 can temporarily display the highlight objects 311, 312 and multiple selection highlight object 313 at a 45 degree counter-clockwise orientation from their original orientation as well. During a rotation operation, the document view module 202 may temporarily display the highlight objects 311, 312 and multiple selection highlight object 313 numerous times to provide the user with visual feedback of the position of the objects 311, 312, 313 in response to the movement of the rotation handle 315. Typically, the step 1112 of temporarily displaying the objects 311, 312, 313 can continue until the user indicates the completion of the rotation operation, for example, by disengaging the rotation handle 315. Furthermore, the objects 311, 312, 313 may be temporarily displayed during the rotation operation with respect to a time cycle (e.g., once per millisecond) or the movement (or lack of movement) of the rotation handle 315.

After step 1112, the exemplary process 1100 proceeds to step 1114 in which the document view module 202 detects the disengagement of the rotation handle 315 by the user interface. For example, the user may stop dragging and/or deselect the rotation handle 315 with a user interface such as the mouse 142. Following step 1114, the document view module 202 signals the highlight list module 208 of the end or completion of the multiple selection rotation operation in step 1116. As a result, the highlight list module 202 can update the highlight objects 311, 312 and the multiple selection highlight object 313 to reflect the final rotated orientation of the obj ects 311, 312, 313 relative to the rotation handle 315 and the axis pin 316.

The exemplary process 1100 then concludes with step 1118 in which the document view module 202 displays the highlight objects 311, 312 and the multiple selection highlight object 313 to reflect the results of the multiple selection rotation operation. For example, the document view module 202 can display the objects 311, 312, 313 as illustrated in Fig. 3C. Thus, both the exemplary processes 1000 and 1100 describe exemplary steps to progress, for example, from the exemplary screen view 310 (Fig. 3B) to the exemplary screen view 320 (Fig. 3C).

Turning now to Fig. 12, a logic flow diagram is shown that illustrates an exemplary process 1200 for deselecting multiple selected objects 301, 302 (e.g., Fig. 3C) in accordance with various exemplary embodiments of the present invention. The exemplary process 1200 begins with step 1202 in which the document view module 202 detects the deselection of the multiple selected objects 301, 302. The deselection of the multiple selected objects may be performed in various ways. For example, a user may make a selection outside of the vicinity of the highlight objects 311, 312 an/or the multiple selection highlight object 313 with a user interface. Other actions may be taken, for example, by a user using one or more user interfaces to perform the deselection as will be apparent to those skilled in the art.

The exemplary process 1200 proceeds from step 1202 to step 1204 in which the selection list module 204 clears the selection objects 206 that it stored. From step 1204, the exemplary process proceeds to step 1206 in which the highlight list module 208 clears the highlight objects 311, 312 and the multiple selection highlight object 313 that it stored. Since the objects 301, 302 were deselected in step 1202, the selection objects 206, highlight objects 311, 312, and multiple selection highlight object 313 no longer need to be stored to assist in displaying the previously multiple selected objects 301, 302.

The exemplary process 1200 concludes with step 1208 in which the document view module displays the deselected objects 301, 302 without the objects 311, 312, 313 previously stored in the highlight list module 208. This step can result in the objects 301, 302 being displayed without the highlight objects 311, 312 and the multiple selection highlight object 313, as illustrated, for example, in Fig. 3D.

Fig. 13 is a logic flow diagram illustrating an exemplary process 1300 for flipping multiple objects 401, 402 (e.g., Fig. 4A) in accordance with various exemplary embodiments of the present invention. The exemplary process 1300 begins with step 1302 in which the document view module 202 detects the input of a multiple selection flip command for the multiple selected objects 401, 402. This command may be submitted in various ways, for example, through a menu selection or a keystroke command using the mouse 142 and/or keyboard 140. The flip command may be a built-in function of the main application module 200 and may have various options (e.g., vertical or horizontal flip), as known in the art.

The exemplary process 1300 concludes with step 1304 in which the document view module 202 displays the highlight objects 311, 312 and the multiple selection highlight object 313 flipped according to the flip command and relative to the position of the axis pin 416. Thus, the execution of steps 1302 and 1304 can result in the progression from the exemplary screen view 400 (Fig. 4A) to the exemplary screen view 410 (Fig. 4B).

Fig. 14 is a logic flow diagram illustrating another exemplary process 1400 for flipping multiple selected objects 501, 502 (e.g., Fig. 5A) in accordance with various exemplary embodiments of the present invention. The exemplary process 1400 begins with step 1402 in which the document view module 202 detects a user interface in the vicinity of the rotation handle 515. A user may move a user interface into the vicinity of the rotation handle 515 by, for example, using a mouse 142 or keyboard 140. Following step 1402, in step 1404, the document view module 202 displays the multiple selection highlight object 513 to include the axis pin 516 as illustrated, for example, in Fig. 5A. A discussed above for Fig. 5A, the axis pin 516, as well as the connecting line 517, can be configured to appear when the user interface is placed in the vicinity of the rotation handle 515 according to some exemplary embodiments of the present invention.

The exemplary process 1400 proceeds to step 1406 in which the document view module 202 detects the positioning of the axis pin 516. For example, a user may utilize a user interface, such as the mouse 142 and/or the keyboard 140 to select and reposition the axis pin 516. In that regard, Fig. 5A illustrates an exemplary screen view 500 in which the axis pin 516 has been repositioned from the typical center position of the multiple selection highlight object 513.

Following step 1406, the document view module 202 detects the input of a multiple selection flip command in step 1408. As discussed above, the multiple selection flip command may be entered in various manners, which may be known in the art. As a result of this step 1408, the highlight list module 208 can update the highlight objects 511, 512 and the multiple selection highlight object 513 in accordance with the flip command.

The exemplary process 1400 concludes with step 1410 in which the document view module 202 displays the highlight objects 511, 512 and the multiple selection highlight object 513 flipped according to the flip command and relative to the position of the axis pin 416. For example, the execution of the steps 1402-1410 of the exemplary process 1400 can result in the progression from the exemplary screen view 500 (Fig. 5A) to the exemplary screen view 510 (Fig. 5B).

Turning now to Fig. 15, a logic flow diagram is shown that illustrates an exemplary process 1500 for resizing multiple selected objects 601, 602 (e.g., Fig 6A or 6C) in accordance with various exemplary embodiments of the present invention. The exemplary process 1500 starts with step 1502 in which the document view module 202 detects the movement of a selection handle (e.g., 614A or 614C) that is part of the multiple selection highlight object 613. The selection handle 614A, 614C may be moved by a user interface such as a mouse 142 or keyboard 140. The step 1502 can result in the resizing of the highlight objects 611, 612 and the multiple selection highlight object 613 relative to the movement of the selection handle 614A, 614C.

The exemplary process 1500 concludes with step 1504 in which the document view module 202 displays the highlight objects 611, 612 and the multiple selection highlight object 613 resized relative to the movement of the selection handle 614A, 614C. The execution of the steps 1502, 1504 can result in the progression from the exemplary screen views 600, 620 (Figs. 6A, 6C) to the exemplary screen views 610, 630 (Figs. 6B, 6D), respectively.

Fig. 16 is a logic flow diagram illustrating another exemplary process 1600 for resizing multiple selected objects 701, 702, 703 (e.g., Fig. 7A) in accordance with various exemplary embodiments of the present invention. The exemplary process 1600 begins with step 1602 in which the document view module 202 detects the movement of a selection handle (e.g., 714A or 714B), which is part of the multiple selection highlight object 716. The selection handle 714A, 714B may be moved by a user interface such as a mouse 142 or keyboard 140. The step 1602 can result in the resize updating of the highlight objects 711, 712 and the multiple selection highlight object 716 relative to the movement of the selection handle 714A, 714B.

The exemplary process 1600 continues from step 1602 to step 1604 in which the document view module 202 signals the highlight list module 208 of the start of a multiple selection resize operation. As a result of this step 1604, the highlight list module 208 can temporarily update the size of the highlight objects 711, 712, 713 and multiple selection highlight object 716 relative to the movement of the selection handle 714A, 714B. This allows the resize operation to be aborted, thereby automatically returning the highlight objects 711, 712, 713 and the multiple selection highlight object 716 to their original sizes, without the need to perform reverse or undo operations. This feature can be beneficial, for example, when a resize operation is aborted, by reducing the needed operations by the user and/or the highlight list module 208 to restore the highlight objects 711, 712, 713 and the multiple selection highlight object 716 to the original sizes they had before the resize operation was started.

After step 1604, in step 1606, the document view module 202 temporarily displays the highlight objects 711, 712, 713 and the multiple selection highlight object 716 in a size that is relative to the movement of the selection handle 714A, 714B. For example, if the selection handle 714A is dragged toward the interior of the multiple selection highlight object 716, the document view module 202 can temporarily display the highlight objects 711, 712, 713 and the multiple selection highlight object 716 in a size that is horizontally compressed with respect to their original sizes. During a resize operation, the document view module may temporarily display the highlight objects 711, 712, 713 and the multiple selection highlight object 716 numerous times to provide the user with visual feedback of the position of the objects 711, 712, 713, 716 in response to the movement of the selection handle 714A, 714B. Typically, the step 1606 of temporarily displaying the objects 711, 712, 713, 716 can continue until the user indicates the completion of the resize operation, for example, by disengaging the selection handle 714A, 714B. Furthermore, the objects 711, 712, 713, 716 may be temporarily displayed during the resize operation with respect to a time cycle (e.g., once per millisecond) or the movement (or lack of movement) of the selection handle 714A, 714B.

Following step 1606, the exemplary process 1600 proceeds to step 1608 in which the document view module 202 detects the disengagement of the selection handle 714A, 714B by the user interface. For example, the user may stop dragging and/or deselect the selection handle 714A, 714B with a user interface such as the mouse 142. Following step 1608, the document view module 202 signals the highlight list module 208 of the end or completion of the multiple selection resize operation in step 1610. As a result, the highlight list module 202 can update the highlight objects 711, 712, 713 and the multiple selection highlight object 716 to reflect the final resizing of the objects 711, 712, 713, 716 relative to the selection handle 714A, 714B.

The exemplary process 1600 concludes with step 1612 in which the document view module 202 displays the highlight objects 711, 712, 713 and the multiple selection highlight object 716 to reflect the results of the multiple selection resize operation. For example, the document view module 202 can display the objects 711, 712, 713, 716 as illustrated in Fig. 7B. Thus, the exemplary process 1600 describes exemplary steps to progress, for example, from the exemplary screen view 700 (Fig. 7A) to the exemplary screen view 710 (Fig. 7B).

It should be understood that the foregoing relates only to illustrative, exemplary embodiments of the present invention. Therefore, it should be further understood that numerous changes may be made therein without departing from the scope of the invention as defined by the following claims.

## Claims

1. A computer-implemented method for selecting and manipulating multiple objects, comprising:
receiving (802) information for the selection of two or more objects in a document;
displaying (810) highlight objects that correspond to the two or more objects, wherein the highlight objects provide visual feedback to indicate the selection of each of the two or more objects; and
displaying (810) a multiple selection highlight object that corresponds to the highlight objects,
wherein the multiple selection highlight object at least partially bounds the highlight objects to provide visual feedback of the multiple selection of the two or more objects,
wherein the highligt objects are automatically configured to be commonty manipulated according to changing the size or orientation of the multiple selection highlight object until at least one of the two or more objects are deselected, at which point each of the two or more objects can be individually manipulated.

2. The method of claim 1, wherein receiving information for the selection of two or more objects comprises receiving information based on one of a continuous selection of all of the two or more objects or an individual selection of each of the two or more objects.

3. The method of claim 1, wherein creating highlight objects that correspond to the two or more objects comprises creating outlines that each at least partially bound one of the two or more objects and add emphasis to the appearance of the two or more objects.

4. The method of claim 1, wherein creating a multiple selection highlight object that corresponds to the highlight objects comprises creating an outline that at least partially bounds the highlight objects, wherein the outline comprises at least one of:
at least one rotation handle that can be manipulated to cause the rotation of the multiple selection highlight object and the highlight objects;
at least one selection handle that can be manipulated to cause the resizing of the multiple selection highlight object and the highlight objects; and
at least one axis pin that can be positioned to provide an axial reference point for the manipulation of the two or more objects.

5. The method of claim 1, further comprising:
detecting a rotative manipulation of the multiple selection highlight object; and
displaying the highlight objects and the multiple selection highlight object in a rotated orientation corresponding to the rotative manipulation of the multiple selection highlight object.

6. The method of claim 4, further comprising:
displaying the multiple selection highlight object with the axis pin visible in response to a positioning of the user interface in a vicinity of the rotation handle;
detecting a positioning of the axis pin;
detecting an engagement and manipulation of the rotation handle by the user interface;
periodically displaying the highlight objects and the multiple selection highlight object in a temporary rotated orientation relative to the positioning of the axis pin and the manipulation of the rotation handle until the rotation handle is disengaged by the user interface; and
displaying the highlight objects and the multiple selection highlight object in a permanently rotated orientation relative to the positioning of the axis pin and corresponding to the manipulation of the rotation handle before it is disengaged by the user interface.

7. The method of claim 4, further comprising:
detecting an input of a flip command for the two or more objects; and
displaying the highlight objects and the multiple selection highlight object in a position that is flipped relative to a position of the axis pin in accordance with the flip command.

8. The method of claim 4, further comprising:
displaying the multiple selection highlight object with the axis pin visible in response to a positioning of the user interface in a vicinity of the rotation handle;
detecting a positioning of the axis pin;
detecting an input of a flip command for the two or more objects; and
displaying the highlight objects and the multiple selection highlight object in a position that is flipped relative to the positioning of the axis pin in accordance with the flip command.

9. The method of claim 4, further comprising:
detecting a manipulation of the selection handle; and
displaying the highlight objects and the multiple selection highlight object with one or more of their dimensions modified relative to the manipulation of the selection handle.

10. The method of claim 4, further comprising:
detecting an engagement and manipulation of the selection handle by a user interface;
periodically displaying the highlight objects and the multiple selection highlight object with one or more of their dimensions temporarily modified relative to the manipulation of the selection handle until the selection handle is disengaged by the user interface; and
displaying the highlight objects and the multiple selection highlight object with one or more of their dimensions permanently modified corresponding to the manipulation of the selection handle before it is disengaged by the user interface.

11. The method of claim 1, further comprising:
detecting the deselection of at least one of the two or more objects; and
displaying the two or more objects with an appearance that corresponds to previous manipulations of the multiple selection highlight object.

12. A computer system for selecting and manipulating multiple objects, comprising:
a processing unit (121);
a memory (122) in communication with the processing unit;
a user interface in communication with the processing unit;
a display device (147) in communication with the processing unit; and
a computer program (136) stored in the memory that provides instructions to the processing unit (121), wherein the processing unit (121) is responsive to the instructions, operable for:
receiving information from the user interface to select two or more objects displayed on the display device;
creating highlight objects that correspond to the two or more objects, wherein the highlight objects provide visual feedback to indicate the selection of each of the two or more objects;
creating a multiple selection highlight object that corresponds to the highlight objects, wherein the multiple selection highlight object at least partially bounds the highlight objects to provide visual feedback of the multiple selection of the two or more objects; and
rendering the highlight objects and the multiple selection highlight object to the display device to provide visual feedback of the multiple selection of the two or more objects, wherein the highlight objects are automatically configured to be commonly manipulated according to changing the size or orientation of the multiple selection highlight object until at least one of the two or more objects are deselected, at which point each of the two or more objects can be individually manipulated.

13. The computer system of claim 12, wherein the processing unit (121), responsive to the instructions, is operable for creating a multiple selection highlight object by creating an outline that at least partially bounds the highlight objects and comprises at least one of:
at least one rotation handle that can be manipulated to cause the rotation of the multiple selection highlight object and the highlight objects;
at least one selection handle that can be manipulated to cause the resizing of the multiple selection highlight object and the highlight objects; and
at least one axis pin that can be positioned to provide an axial reference point for the manipulation of the two or more objects.

14. The computer system of claim 13, wherein the processing unit (121), responsive to the instructions, is further operable for:
rendering the multiple selection highlight object with the axis pin to the display device in response to a positioning of the user interface in a vicinity of the rotation handle;
detecting a positioning of the axis pin by the user interface;
detecting an engagement and manipulation of the rotation handle by the user interface; and
rendering the highlight objects and the multiple selection highlight object to the display device in a rotated orientation relative to the positioning of the axis pin and corresponding to the manipulation of the rotation handle.

15. The computer system of claim 13, wherein the processing unit (121), responsive to the instructions, is further operable for:
rendering the multiple selection highlight object with the axis pin to the display device in response to a positioning of the user interface in a vicinity of the rotation handle;
detecting a positioning of the axis pin by the user interface;
detecting the input of a flip command for the two or more objects via the user interface; and
rendering the highlight objects and the multiple selection highlight object to the display device in a position that is flipped relative to the positioning of the axis pin in accordance with the flip command.

16. The computer system of claim 13, wherein the processing unit (121), responsive to the instructions, is further operable for:
detecting an engagement and manipulation of the selection handle by the user interface; and
rendering the highlight objects and the multiple selection highlight object to the display device with one or more of their dimensions modified corresponding to the manipulation of the selection handle before it is disengaged by the user interface.

17. The computer system of claim 13, wherein the processing unit (121), responsive to the instructions, is further operable for:
detecting the deselection of at least one of the two or more objects by the user interface; and
rendering the two or more objects to the display device with an appearance that corresponds to previous manipulations of the multiple selection highlight object.

18. A computer-readable medium having computer-executable instructions for selecting and manipulating multiple objects, comprising:
logic for receiving information for the selection of a first object displayed in a graphical user interface;
logic for creating a first highlight object that provides visual feedback to indicate the selection of the first object;
logic for receiving information for the selection of a second object displayed in the graphical user interface;
logic for creating a second highlight object that provides visual feedback to indicate the selection of the second object;
logic for creating a multiple selection highlight object that at least partially bounds the first highlight object and the second highlight object to provide visual feedback of the multiple selection of the first object and the second object;
logic for aligning the multiple selection highlight object to an orientation of the first highlight object;
logic for displaying the first highlight object, the second highlight object, and the multiple selection highlight object in the graphical user interface to provide visual feedback of the multiple selection of the first object and the second object; and
Logic for automatically configuring the first highlight object and the second highlight object to be commonly manipulated according to changing the size or orientation of the multiple selection highlight object until at least one of the first and second objects is deselected, at which point each of the first and second objects can be individually manipulated.

19. The computer-readable medium of claim 18, further comprising:
logic for detecting a manipulation of the multiple selection highlight object relative to a single dimension;
logic for proportionately resizing two or more dimensions of the first highlight object in correspondence with the manipulation of the multiple selection highlight object when the first highlight object is not aligned with the orientation of the multiple selection highlight object, thereby reducing distortion of the shape of the object when it is resized; and
logic for rendering the first highlight object, the second highlight object, and the multiple selection highlight object to the graphical user interface with one or more of their dimensions modified in correspondence with the manipulation of the multiple selection highlight object.

## Patentansprüche

1. Computerimplementiertes Verfahren zum Auswählen und Manipulieren von Mehrfachobjekten bzw. mehreren Objekten, umfassend:
Empfangen (802) von Information für die Auswahl von zwei oder mehr Objekten in einem Dokument;
Anzeigen (810) von Markierungsobjekten, die den zwei oder mehr Objekten entsprechen, wobei die Markierungsobjekte eine optische Rückmeldung bereitstellen, um die Auswahl von jedem der zwei oder mehr Objekte anzugeben; und
Anzeigen (810) eines Mehrfachauswahlmarkierungsobjektes, das den Markierungsobjekten entspricht,
wobei das Mehrfachauswahlmarkierungsobjekt die Markierungsobjekte wenigstens teilweise abgrenzt, um eine optische Rückmeldung der Mehrfachauswahl der zwei oder mehr Objekte bereitzustellen,
wobei die Markierungsobjekte automatisch derart konfiguriert werden, dass sie gemeinsam entsprechend einer Änderung der Größe oder Orientierung des Mehrfachauswahlmarkierungsobjektes manipuliert werden, bis die Auswahl von wenigstens einem der zwei oder mehr Objekte aufgehoben ist, wobei an diesem Punkt jedes von den zwei oder mehr Objekten einzeln manipuliert werden kann.

2. Verfahren nach Anspruch 1, wobei das Empfangen von Information für die Auswahl von zwei oder mehr Objekten ein Empfangen von Information auf Grundlage von entweder einer kontinuierlichen Auswahl von allen der zwei oder mehr Objekte oder einer Einzelauswahl von jedem der zwei oder mehr Objekte umfasst.

3. Verfahren nach Anspruch 1, wobei das Erzeugen von Markierungsobjekten, die den zwei oder mehr Objekten entsprechen, ein Erzeugen von Umrissen umfasst, die jeweils wenigstens teilweise eines von den zwei oder mehr Objekten abgrenzen und das Aussehen der zwei oder mehr Objekte hervorheben.

4. Verfahren nach Anspruch 1, wobei das Erzeugen eines Mehrfachauswahlmarkierungsobjektes, das den Markierungsobjekten entspricht, ein Erzeugen eines Umrisses umfasst, der wenigstens teilweise die Markierungsobjekte abgrenzt, wobei der Umriss wenigstens eines umfasst von:
wenigstens einer Drehungsangriffsmarke, die manipuliert werden kann, um die Drehung des Mehrfachauswahlmarkierungsobjektes und der Markierungsobjekte zu bewirken;
wenigstens einer Auswahlangriffsmarke, die manipuliert werden kann, um die Größenänderung des Mehrfachauswahlmarkierungsobjektes und der Markierungsobjekte zu bewirken; und
wenigstens einer Achsenbezugsmarke, die positioniert werden kann, um einen Axialbezugspunkt für die Manipulation der zwei oder mehr Objekte bereitzustellen.

5. Verfahren nach Anspruch 1, des Weiteren umfassend:
Erfassen einer Drehmanipulation des Mehrfachauswahlmarkierungsobjektes; und
Anzeigen der Markierungsobjekte und des Mehrfachauswahlmarkierungsobjektes in einer gedrehten Orientierung entsprechend der Drehmanipulation des Mehrfachauswahlmarkierungsobjektes.

6. Verfahren nach Anspruch 4, des Weiteren umfassend:
Anzeigen des Mehrfachauswahlmarkierungsobjektes, wobei die Achsenbezugsmarke in Reaktion auf eine Positionierung der Anwenderschnittstelle in einer Umgebung der Drehungsangriffsmarke sichtbar ist;
Erfassen einer Positionierung der Achsenbezugsmarke;
Erfassen einer Aktivierung und Manipulation der Drehungsangriffsmarke durch die Anwenderschnittstelle;
periodisches Anzeigen der Markierungsobjekte und des Mehrfachauswahlmarkierungsobjektes in einer vorübergehend gedrehten Orientierung relativ zur Positionierung der Achsenbezugsmarke und der Manipulation der Drehungsangriffsmarke, bis die Drehungsangriffsmarke von der Anwenderschnittstelle deaktiviert wird; und
Anzeigen der Markierungsobjekte und des Mehrfachauswahlmarkierungsobjektes in einer dauerhaft gedrehten Orientierung relativ zur Positionierung der Achsenbezugsmarke und entsprechend der Manipulation der Drehungsangriffsmarke vor der Deaktivierung hiervon durch die Anwenderschnittstelle.

7. Verfahren nach Anspruch 4, des Weiteren umfassend:
Erfassen einer Eingabe eines Kippbefehls für die zwei oder mehr Objekte; und
Anzeigen der Markierungsobjekte und des Mehrfachauswahlmarkierungsobjektes in einer Position, die relativ zu einer Position der Achsenbezugsmarke in Entsprechung zu dem Kippbefehl gekippt ist.

8. Verfahren nach Anspruch 4, des Weiteren umfassend:
Anzeigen des Mehrfachauswahlmarkierungsobjektes, wobei die Achsenbezugsmarke in Reaktion auf eine Positionierung der Anwenderschnittstelle in einer Umgebung der Drehungsangriffsmarke sichtbar ist;
Erfassen einer Positionierung der Achsenbezugsmarke;
Erfassen einer Eingabe eines Kippbefehls für die zwei oder mehr Objekte; und
Anzeigen der Markierungsobjekte und des Mehrfachauswahlmarkierungsobjektes in einer Position, die relativ zur Positionierung der Achsenbezugsmarke in Entsprechung zu dem Kippbefehl gekippt ist.

9. Verfahren nach Anspruch 4, des Weiteren umfassend:
Erfassen einer Manipulation der Auswahlangriffsmarke; und
Anzeigen der Markierungsobjekte und des Mehrfachauswahlmarkierungsobjektes, wobei eine oder mehrere der Abmessungen hiervon relativ zur Manipulation der Auswahlangriffsmarke modifiziert sind.

10. Verfahren nach Anspruch 4, des Weiteren umfassend:
Erfassen einer Aktivierung und Manipulation der Auswahlangriffsmarke durch eine Anwenderschnittstelle;
periodisches Anzeigen der Markierungsobjekte und des Mehrfachauswahlmarkierungsobjektes, wobei eine oder mehrere der Abmessungen hiervon vorübergehend relativ zur Manipulation der Auswahlangriffsmarke modifiziert sind, bis die Auswahlangriffsmarke von der Anwenderschnittstelle deaktiviert wird; und
Anzeigen der Markierungsobjekte und des Mehrfachauswahlmarkierungsobjektes, wobei eine oder mehrere der Abmessungen hiervon dauerhaft entsprechend der Manipulation der Auswahlangriffsmarke vor der Deaktivierung hiervon durch die Anwenderschnittstelle modifiziert sind.

11. Verfahren nach Anspruch 1, des Weiteren umfassend:
Erfassen der Auswahlaufhebung von wenigstens einem von den zwei oder mehr Objekten; und
Anzeigen der zwei oder mehr Objekte mit einem Aussehen, das den vorherigen Manipulationen des Mehrfachauswahlmarkierungsobjektes entspricht.

12. Computersystem zum Auswählen und Manipulieren von Mehrfachobjekten bzw. mehreren Objekten, umfassend:
eine Verarbeitungseinheit (121);
einen Speicher (122) in Kommunikation mit der Verarbeitungseinheit;
eine Anwenderschnittstelle in Kommunikation mit der Verarbeitungseinheit;
eine Anzeigevorrichtung (147) in Kommunikation mit der Verarbeitungseinheit; und
ein in dem Speicher abgelegtes Computerprogramm (136), das Anweisungen für die Verarbeitungseinheit (121) bereitstellt, wobei die Verarbeitungseinheit (121) auf die Anweisungen reagiert, betreibbar zum:
Empfangen von Information von der Anwenderschnittstelle zur Auswahl von zwei oder mehr Objekten, die auf der Anzeigevorrichtung angezeigt werden;
Erzeugen von Markierungsobjekten, die den zwei oder mehr Objekten entsprechen, wobei die Markierungsobjekte eine optische Rückmeldung bereitstellen, um die Auswahl von jedem der zwei oder mehr Objekte anzugeben;
Erzeugen eines Mehrfachauswahlmarkierungsobjektes, das den Markierungsobjekten entspricht, wobei das Mehrfachauswahlmarkierungsobjekt die Markierungsobjekte wenigstens teilweise abgrenzt, um eine optische Rückmeldung der Mehrfachauswahl der zwei oder mehr Objekte bereitzustellen; und
Abgeben der Markierungsobjekte und des Mehrfachauswahlmarkierungsobjektes an die Anzeigevorrichtung, um eine optische Rückmeldung der Mehrfachauswahl der zwei oder mehr Objekte bereitzustellen, wobei die Markierungsobjekte automatisch derart konfiguriert werden, dass sie gemeinsam entsprechend einer Änderung der Größe oder Orientierung des Mehrfachauswahlmarkierungsobjektes manipuliert werden, bis die Auswahl von wenigstens einem der zwei oder mehr Objekte aufgehoben wird, wobei an diesem Punkt jedes von den zwei oder mehr Objekten einzeln manipuliert werden kann.

13. Computersystem nach Anspruch 12, wobei die Verarbeitungseinheit (121) in Reaktion auf die Anweisungen betreibbar ist zum Erzeugen eines Mehrfachauswahlmarkierungsobjektes durch Erzeugen eines Umrisses, der die Markierungsobjekte wenigstens teilweise abgrenzt und wenigstens eines umfasst von:
wenigstens einer Drehungsangriffsmarke, die manipuliert werden kann, um die Drehung des Mehrfachauswahlmarkierungsobjektes und der Markierungsobjekte zu bewirken;
wenigstens einer Auswahlangriffsmarke, die manipuliert werden kann, um die Größenänderung des Mehrfachauswahlmarkierungsobjektes und der Markierungsobjekte zu bewirken; und
wenigstens eine Achsenbezugsmarke, die positioniert werden kann, um einen Axialbezugspunkt für die Manipulation der zwei oder mehr Objekte bereitzustellen.

14. Computersystem nach Anspruch 13, wobei die Verarbeitungseinheit (121) in Reaktion auf die Anweisungen des Weiteren betreibbar ist zum:
Abgeben des Mehrfachauswahlmarkierungsobjektes mit der Achsenbezugsmarke an die Anzeigevorrichtung in Reaktion auf eine Positionierung der Anwenderschnittstelle in einer Umgebung der Drehungsangriffsmarke;
Erfassen einer Positionierung der Achsenbezugsmarke durch die Anwenderschnittstelle;
Erfassen einer Aktivierung und Manipulation der Drehungsangriffsmarke durch die Anwenderschnittstelle; und
Abgeben des Markierungsobjektes und des Mehrfachauswahlmarkierungsobjektes an die Anzeigevorrichtung in einer gedrehten Orientierung relativ zur Positionierung der Achsenbezugsmarke und entsprechend der Manipulation der Drehungsangriffsmarke.

15. Computersystem nach Anspruch 13, wobei die Verarbeitungseinheit (121) in Reaktion auf die Anweisungen des Weiteren betreibbar ist zum:
Abgeben des Mehrfachauswahlmarkierungsobjektes mit der Achsenbezugsmarke an die Anzeigevorrichtung in Reaktion auf eine Positionierung der Anwenderschnittstelle in einer Umgebung der Drehungsangriffsmarke;
Erfassen einer Positionierung der Achsenbezugsmarke durch die Anwenderschnittstelle;
Erfassen der Eingabe eines Kippbefehls für die zwei oder mehr Objekte über die Anwenderschnittstelle; und
Abgeben der Markierungsobjekte und des Mehrfachauswahlmarkierungsobjektes an die Anzeigevorrichtung in einer Position, die relativ zur Positionierung der Achsenbezugsmarke in Entsprechung zu dem Kippbefehl gekippt ist.

16. Computersystem nach Anspruch 13, wobei die Verarbeitungseinheit (121) in Reaktion auf die Anweisungen des Weiteren betreibbar ist zum:
Erfassen einer Aktivierung und Manipulation der Auswahlangriffsmarke durch die Anwenderschnittstelle; und
Abgeben des Markierungsobjektes und des Mehrfachauswahlmarkierungsobjektes an die Anzeigevorrichtung, wobei eine oder mehrere der Abmessungen hiervon entsprechend der Manipulation der Auswahlangriffsmarke vor der Deaktivierung hiervon durch die Anwenderschnittstelle modifiziert werden.

17. Computersystem nach Anspruch 13, wobei die Verarbeitungseinheit (121) in Reaktion auf die Anweisungen des Weiteren betreibbar ist zum:
Erfassen der Auswahlaufhebung von wenigstens einem von den zwei oder mehr Objekten durch die Anwenderschnittstelle; und
Abgeben der zwei oder mehr Objekte an die Anzeigevorrichtung mit einem Aussehen, das vorherigen Manipulationen des Mehrfachauswahlmarkierungsobjektes entspricht.

18. Computerlesbares Medium mit computerausführbaren Anweisungen zum Auswählen und Manipulieren von Mehrfachobjekten bzw. mehreren Objekten, umfassend:
Logik zum Empfangen von Information für die Auswahl eines ersten Objektes, das in einer grafischen Anwenderschnittstelle angezeigt wird;
Logik zum Erzeugen eines ersten Markierungsobjektes, das eine optische Rückmeldung bereitstellt, um die Auswahl des ersten Objektes anzugeben;
Logik zum Empfangen von Information für die Auswahl eines zweiten Objektes, das in der grafischen Anwenderschnittstelle angezeigt wird;
Logik zum Erzeugen eines zweiten Markierungsobjektes, das eine optische Rückmeldung bereitstellt, um die Auswahl des zweiten Objektes anzugeben;
Logik zum Erzeugen eines Mehrfachauswahlmarkierungsobjektes, das das erste Markierungsobjekt und das zweite Markierungsobjekt wenigstens teilweise abgrenzt, um eine optische Rückmeldung der Mehrfachauswahl des ersten Objektes und des zweiten Objektes bereitzustellen;
Logik zum Ausrichten des Mehrfachauswahlmarkierungsobjektes in einer Orientierung des ersten Markierungsobjektes;
Logik zum Anzeigen des ersten Markierungsobjektes, des zweiten Markierungsobjektes und des Mehrfachauswahlmarkierungsobjektes in der grafischen Anwenderschnittstelle, um eine optische Rückmeldung der Mehrfachauswahl des ersten Objektes und des zweiten Objektes bereitzustellen; und
Logik zum automatischen Konfigurieren des ersten Markierungsobjektes und des zweiten Markierungsobjektes zur gemeinsamen Manipulation entsprechend einer Änderung der Größe oder Orientierung des Mehrfachauswahlmarkierungsobjektes,
bis die Auswahl von wenigstens einem von den ersten und zweiten Objekten aufgehoben ist, wobei an diesem Punkt jedes von den ersten und zweiten Objekten einzeln manipuliert werden kann.

19. Computerlesbares Medium nach Anspruch 18, des Weiteren umfassend:
Logik zum Erfassen einer Manipulation des Mehrfachauswahlmarkierungsobjektes relativ zu einer einzelnen Abmessung;
Logik zum Proportionalgrößenändern von zwei oder mehr Abmessungen des ersten Markierungsobjektes in Entsprechung zur Manipulation des Mehrfachauswahlmarkierungsobjektes, wenn das erste Markierungsobjekt nicht mit der Orientierung des Mehrfachauswahlmarkierungsobjektes ausgerichtet ist, wodurch die Verzerrung der Form des Objektes bei dessen Größenänderung verringert wird; und
Logik zum Abgeben des ersten Markierungsobjektes, des zweiten Markierungsobjektes und des Mehrfachauswahlmarkierungsobjektes an die grafische Anwenderschnittstelle, wobei eine oder mehrere von der Abmessungen hiervon in Entsprechung zur Manipulation des Mehrfachauswahlmarkierungsobjektes modifiziert sind.

## Revendications

1. Procédé mis en oeuvre par ordinateur pour sélectionner et manipuler de multiples objets, comprenant les étapes consistant à :
recevoir (802) des informations pour la sélection de deux objets ou plus dans un document ;
afficher (810) des objets en évidence qui correspondent aux deux objets ou plus, les objets en évidence fournissant une rétroaction visuelle pour indiquer la sélection de chacun des deux objets ou plus ; et
afficher (810) un objet en évidence à sélection multiple qui correspond aux objets en évidence,
dans lequel l'objet en évidence à sélection multiple délimite au moins partiellement les objets en évidence pour fournir un rétroaction visuelle de la sélection multiple des deux objets ou plus,
dans lequel les objets en évidence sont automatiquement configurés pour être manipulés en commun selon le changement de la taille ou de l'orientation de l'objet en évidence à sélection multiple jusqu'à ce qu'au moins un des deux objets ou plus soit désélectionné, auquel point chacun des deux objets ou plus peut être manipulé individuellement.

2. Procédé selon la revendication 1, dans lequel la réception des informations pour la sélection de deux objets ou plus comprend la réception d'informations sur la base de l'une d'une sélection continue de l'ensemble des deux objets ou plus ou d'une sélection individuelle de chacun des deux objets ou plus.

3. Procédé selon la revendication 1, dans lequel la création d'objets en évidence qui correspondent aux deux objets ou plus comprend la création de tracés qui délimitent chacun au moins partiellement un des deux objets ou plus et accentuent l'aspect des deux objets ou plus.

4. Procédé selon la revendication 1, dans lequel la création d'un objet en évidence à sélection multiple qui correspond aux objets en évidence comprend la création d'un tracé qui délimite au moins partiellement les objets en évidence, le tracé comprenant au moins un parme :
au moins une poignée de rotation qui peut être manipulée pour entraîner la rotation de l'objet en évidence à sélection multiple et des objets en évidence ;
au moins une poignée de sélection qui peut être manipulée pour entraîner le redimensionnement de l'objet en évidence à sélection multiple et des objets en évidence ; et
au moins un axe qui peut être positionné pour fournir un point de référence axial pour la manipulation des deux objets ou plus.

5. Procédé selon la revendication 1, comprenant en outre les étapes consistant à :
détecter une manipulation rotative de l'objet en évidence à sélection multiple ; et
afficher les objets en évidence et l'objet en évidence à sélection multiple dans une orientation tournée correspondant à la manipulation rotative de l'objet en évidence à sélection multiple.

6. Procédé selon la revendication 4, comprenant en outre les étapes consistant à :
afficher l'objet en évidence à sélection multiple avec l'axe visible en réponse à un positionnement de l'interface utilisateur au voisinage de la poignée de rotation ;
détecter un positionnement de l'axe ;
détecter un engagement et une manipulation de la poignée de rotation par l'interface utilisateur ;
afficher périodiquement les objets en évidence et l'objet en évidence à sélection multiple dans une orientation provisoirement tournée par rapport au positionnement de l'axe et à la manipulation de la poignée de rotation jusqu'à ce que la poignée de rotation soit désengagée par l'interface utilisateur ; et
afficher les objets en évidence et l'objet en évidence à sélection multiple dans une orientation tournée de façon permanente par rapport au positionnement de l'axe et correspondant à la manipulation de la poignée de rotation avant qu'elle soit désengagée par l'interface utilisateur.

7. Procédé selon la revendication 4, comprenant en outre les étapes consistant à :
détecter une entrée d'une commande de bascule pour les deux objets ou plus ; et
afficher les objets en évidence et l'objet en évidence à sélection multiple dans une position qui est basculée par rapport à une position de l'axe selon la commande de bascule.

8. Procédé selon la revendication 4, comprenant en outre les étapes consistant à :
afficher l'objet en évidence à sélection multiple avec l'axe visible en réponse à un positionnement de l'interface utilisateur au voisinage de la poignée de rotation ;
détecter un positionnement de l'axe ;
détecter une entrée d'une commande de bascule pour les deux objets ou plus ; et
afficher les objets en évidence et l'objet en évidence à sélection multiple dans une position qui est basculée par rapport au positionnement de l'axe selon la commande de bascule.

9. Procédé selon la revendication 4, comprenant en outre les étapes consistant à :
détecter une manipulation de la poignée de sélection ; et
afficher les objets en évidence et l'objet en évidence à sélection multiple avec une ou plusieurs de leurs dimensions modifiées par rapport à la manipulation de la poignée de sélection.

10. Procédé selon la revendication 4, comprenant en outre les étapes consistant à :
détecter un engagement et une manipulation de la poignée de sélection par une interface utilisateur ;
afficher périodiquement les objets en évidence et l'objet en évidence à sélection multiple avec une ou plusieurs de leurs dimensions modifiées provisoirement par rapport à la manipulation de la poignée de sélection jusqu'à ce que la poignée de sélection soit désengagée par l'interface utilisateur ; et
afficher les objets en évidence et l'objet en évidence à sélection multiple avec une ou plusieurs de leurs dimensions modifiées de façon permanence en correspondance avec la manipulation de la poignée de sélection avant qu'elle soit désengagée par l'interface utilisateur.

11. Procédé selon la revendication 1, comprenant en outre les étapes consistant à :
détecter la désélection d'au moins un des deux objets ou plus ; et
afficher les deux objets ou plus avec un aspect qui correspond aux manipulations précédentes de l'objet en évidence à sélection multiple.

12. Système informatique pour sélectionner et manipuler de multiples objets, comprenant :
une unité de traitement (121) ;
une mémoire (122) en communication avec l'unité de traitement ;
une interface utilisateur en communication avec l'unité de traitement ;
un dispositif d'affichage (147) en communication avec l'unité de traitement ; et
un programme informatique (136) stocké dans la mémoire qui fournit des instructions à l'unité de traitement (121), l'unité de traitement (121) répondant aux instructions, permettant de :
recevoir des informations de l'interface utilisateur pour sélectionner deux objets ou plus affichés sur le dispositif d'affichage ;
créer des objets en évidence qui correspondent aux deux objets ou plus, les objets en évidence fournissant une rétroaction visuelle pour indiquer la sélection de chacun des deux objets ou plus ;
créer un objet en évidence à sélection multiple qui correspond aux objets en évidence, l'objet en évidence à sélection multiple délimitant au moins partiellement les objets en évidence qui fournissent une rétroaction visuelle de la sélection multiple des deux objets ou plus ; et
opérer un rendu des objets en évidence et de l'objet en évidence à sélection multiple sur le dispositif d'affichage pour fournir une rétroaction visuelle de la sélection multiple des deux objets ou plus, les objets en évidence étant configurés automatiquement pour être manipulés en commun selon le changement de la taille ou de l'orientation de l'objet en évidence à sélection multiple jusqu'à ce qu'au moins un des deux objets ou plus soit désélectionné, auquel stade chacun des deux objets ou plus peut être manipulé individuellement.

13. Système informatique selon la revendication 12, dans lequel l'unité de traitement (121), en réponse aux instructions, sert à créer un objet en évidence à sélection multiple en créant un tracé qui délimite au moins partiellement les objets en évidence et comprend au moins un parme :
au moins une poignée de rotation qui peut être manipulée pour entraîner la rotation de l'objet en évidence à sélection multiple et des objets en évidence ;
au moins une poignée de sélection qui peut être manipulée pour entraîner le redimensionnement de l'objet en évidence à sélection multiple et des objets en évidence ; et
au moins un axe qui peut être positionné pour fournir un point de référence axiale pour la manipulation des deux objets ou plus.

14. Système informatique selon la revendication 13, dans lequel l'unité de traitement (121), en réponse aux instructions, permet en outre de :
opérer un rendu de l'objet en évidence à sélection multiple avec l'axe sur le dispositif d'affichage en réponse à un positionnement de l'interface utilisateur au voisinage de la poignée de rotation ;
détecter un positionnement de l'axe par l'interface utilisateur ;
détecter un engagement et une manipulation de la poignée de rotation par l'interface utilisateur ; et
opérer un rendu des objets en évidence et l'objet en évidence à sélection multiple sur le dispositif d'affichage dans une orientation tournée par rapport au positionnement de l'axe et en correspondance avec la manipulation de la poignée de rotation.

15. Système informatique selon la revendication 13, dans lequel l'unité de traitement (121), en réponse au instructions, permet en outre de :
opérer un rendu de l'objet en évidence à sélection multiple avec l'axe sur le dispositif d'affichage en réponse à un positionnement de l'interface utilisateur au voisinage de la poignée de rotation ;
détecter un positionnement de l'axe par l'interface utilisateur ;
détecter l'entrée d'une commande de bascule pour les deux objets ou plus par le biais de l'interface utilisateur ; et
opérer un rendu des objets en évidence et de l'objet en évidence à sélection multiple sur le dispositif d'affichage dans une position qui est basculée par rapport au positionnement de l'axe selon la commande de bascule.

16. Système informatique selon la revendication 13, dans lequel l'unité de traitement (121), en réponse aux instructions, permet en outre de :
détecter un engagement et une manipulation de la poignée de sélection par l'interface utilisateur ; et
opérer un rendu des objets en évidence et de l'objet en évidence à sélection multiple sur le dispositif d'affichage avec une ou plusieurs de leurs dimensions modifiées en correspondance avec la manipulation de la poignée de sélection avant qu'elle soit désengagée par l'interface utilisateur.

17. Système informatique selon la revendication 13, dans lequel l'unité de traitement (121), en réponse aux instructions, permet en outre de :
détecter la désélection d'au moins un des deux ou plusieurs objets par l'interface utilisateur ; et
opérer un rendu des deux objets ou plus sur le dispositif d'affichage avec un aspect qui correspond aux manipulations précédentes de l'objet en évidence à sélection multiple.

18. Support lisible par ordinateur ayant des instructions exécutables par ordinateur pour sélectionner et manipuler de multiples objets, comprenant :
une logique pour recevoir des informations pour la sélection d'un premier objet affiché sur une interface utilisateur graphique ;
une logique pour créer un premier objet en évidence qui offre une rétroaction visuelle pour indiquer la sélection du premier objet ;
une logique pour recevoir des informations pour la sélection d'un second objet affiché sur l'interface utilisateur graphique ;
une logique pour créer un second objet en évidence qui offre une rétroaction visuelle pour indiquer la sélection du second objet ;
une logique pour créer un objet en évidence à sélection multiple qui délimite au moins partiellement le premier objet en évidence et le second objet en évidence pour fournir une rétroaction visuelle de la sélection multiple du premier objet et du second objet ;
une logique pour aligner l'objet en évidence à sélection multiple sur une orientation du premier objet en évidence ;
une logique pour afficher le premier objet en évidence, le second objet en évidence et l'objet en évidence à sélection multiple sur l'interface utilisateur graphique pour fournir une rétroaction visuelle de la sélection multiple du premier objet et du second objet ; et
une logique pour configurer automatiquement le premier objet en évidence et le second objet en évidence pour qu'ils soient manipulés en commun selon le changement de taille ou d'orientation de l'objet en évidence à sélection multiple jusqu'à ce qu'au moins un des premier et second objets soit désélectionné, auquel stade chacun des premier et second objets peut être manipulé individuellement.

19. Support lisible par ordinateur selon la revendication 18, comprenant en outre :
une logique pour détecter une manipulation de l'objet en évidence à sélection multiple par rapport à une seule dimension ;
une logique pour redimensionner proportionnellement deux ou plusieurs dimensions du premier objet en évidence en correspondance avec la manipulation de l'objet en évidence à sélection multiple lorsque le premier objet en évidence n'est pas aligné sur l'orientation de l'objet en évidence à sélection multiple, réduisant ainsi la déformation de la forme de l'objet lorsqu'il est redimensionné ; et
une logique pour opérer un rendu du premier objet en évidence, du second objet en évidence et de l'objet en évidence à sélection multiple sur l'interface utilisateur graphique avec une ou plusieurs de leurs dimensions modifiées en correspondance avec la manipulation de l'objet en évidence à sélection multiple.
